(19) Europäisches Patentamt
European Patent Office
Office européen des brevets

(11) EP 4 620 692 A1

(12) EUROPEAN PATENT APPLICATION

(43) Date of publication:
24.09.2025 Bulletin 2025/39

(51) International Patent Classification (IPC):
B41M 5/00 (2006.01)   C09D 11/54 (2014.01)

(21) Application number: 25164537.0

(52) Cooperative Patent Classification (CPC):
B41M 5/0017; C09D 11/54

(22) Date of filing: 18.03.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2024 JP 2024047319

(71) Applicant: FUJIFILM Corporation
Tokyo 106-8620 (JP)

(72) Inventors:
• MURAI, Daigo
  Kanagawa, 258-8577 (JP)
• IKOSHI, Masao
  Kanagawa, 258-8577 (JP)

(74) Representative: Klunker IP
Patentanwälte PartG mbB
Destouchesstraße 68
80796 München (DE)

(54) **INK JET RECORDING METHOD, MANUFACTURING METHOD OF MELAMINE DECORATIVE PLATE, AND MELAMINE DECORATIVE PLATE**

(57)     Provided is an ink jet recording method in which an image has a high yellow density and jettability of an ink is excellent.

The ink jet recording method includes: a step of applying, onto a permeable substrate having an air permeability resistance of 5 seconds to 50 seconds according to a Gurley method, a pretreatment liquid which contains at least one coagulating agent selected from the group consisting of an organic acid having a molecular weight of less than 1000 and a polyvalent metal salt, and water; and a step of applying a yellow ink onto a region of the permeable substrate, onto which the pretreatment liquid has been applied, by an ink jet recording system, in which the yellow ink contains water, an organic solvent having a boiling point of 250°C or higher, C. I. Pigment Yellow 110, and a carboxy group-containing resin $D^Y$, and a content of the organic solvent having a boiling point of 250°C or higher is 15% by mass to 40% by mass with respect to a total amount of the yellow ink.

## FIG. 1

EP 4 620 692 A1

**Description**

BACKGROUND OF THE INVENTION

1. Field of the Invention

The present disclosure relates to an ink jet recording method, a manufacturing method of a melamine decorative plate, and a melamine decorative plate.

2. Description of the Related Art

In the related art, various studies have been conducted on image recording in which an ink is applied by an ink jet recording system.

For example, JP2022-001621A discloses an ink set for a decorative plate, which contains a cyan ink, a magenta ink, and a yellow ink, and is jetted by an inkjet method, in which each ink composition contains a pigment, and a content C of a pigment contained in the cyan ink is smaller than a content M of a pigment contained in the magenta ink or a content Y of a pigment contained in the yellow ink.

US2016/0214395A discloses an ink jet recording method including a step of performing ink jet printing of a color pattern on a paper substrate including an ink receiving layer, and a step of infusing the paper substrate with a thermosetting resin.

SUMMARY OF THE INVENTION

C. I. Pigment Yellow 110 (PY110) may be used as a yellow pigment. In a case where PY110 is used, a yellow density of an image to be obtained is low, and particularly, in a case of a permeable substrate such as a decorative paper and a high-quality paper, the ink tends to permeate into the substrate, and the yellow density tends to be low. In a case where the yellow density of the image is intended to be improved, jettability of the ink may be decreased.

An object of one embodiment of the present disclosure is to provide an inkjet recording method in which an image has a high yellow density and jettability of an ink is excellent.

An object of another embodiment of the present disclosure is to provide a manufacturing method of a melamine decorative plate and a melamine decorative plate, which are obtained by the above-described ink jet recording method.

The present disclosure includes the following aspects.

<1> An ink jet recording method comprising:

a step of applying, onto a permeable substrate having an air permeability resistance of 5 seconds to 50 seconds according to a Gurley method, a pretreatment liquid which contains at least one coagulating agent selected from the group consisting of an organic acid having a molecular weight of less than 1000 and a polyvalent metal salt, and water; and

a step of applying a yellow ink onto a region of the permeable substrate, onto which the pretreatment liquid has been applied, by an ink jet recording system,

in which the yellow ink contains water, an organic solvent having a boiling point of 250°C or higher, C. I. Pigment Yellow 110, and a carboxy group-containing resin $D^Y$, and

a content of the organic solvent having a boiling point of 250°C or higher is 15% by mass to 40% by mass with respect to a total amount of the yellow ink.

<2> The ink jet recording method according to <1>,

in which an application amount of the coagulating agent applied onto the permeable substrate is 0.08 $g/m^2$ to 0.35 $g/m^2$.

<3> The ink jet recording method according to <1> or <2>,

in which a mass ratio Y of a content of the carboxy group-containing resin $D^Y$ to a content of the C. I. Pigment Yellow 110 in the yellow ink is 0.25 to 0.80.

<4> The ink jet recording method according to any one of <1> to <3>,

in which the yellow ink contains at least one surfactant selected from an acetylene compound or a polyoxyalkylene alkyl ether.

<5> The ink jet recording method according to any one of <1> to <4>,

in which an average particle diameter of the C. I. Pigment Yellow 110 in the yellow ink is 100 nm to 160 nm.

<6> The ink jet recording method according to any one of <1> to <5>,

in which an absolute value of a difference between a surface tension of the yellow ink and a surface tension of the pretreatment liquid is 10 mN/m or less.

<7> The ink jet recording method according to any one of <1> to <6>, further comprising:

a step of applying a magenta ink containing water, C. I. Pigment Red 254, and a carboxy group-containing resin $D^M$ onto the region of the permeable substrate, onto which the pretreatment liquid has been applied, by an ink jet recording system.

<8> The ink jet recording method according to any one of <1> to <7>, further comprising:

a step of applying a black ink containing water, a black pigment, and a carboxy group-containing resin $D^K$ onto the region of the permeable substrate, onto which the pretreatment liquid has been applied, by an ink jet recording system,

in which a mass ratio Y of a content of the carboxy group-containing resin $D^Y$ to a content of the C. I. Pigment Yellow 110 in the yellow ink is smaller than a mass ratio K of a content of the carboxy group-containing resin $D^K$ to a content of the black pigment in the black ink.

<9> The ink jet recording method according to any one of <1> to <8>,
in which the carboxy group-containing resin $D^Y$ is a polymer having no crosslinking structure.

<10> The ink jet recording method according to <7>,
in which the carboxy group-containing resin $D^M$ is a polymer having a crosslinking structure.

<11> The ink jet recording method according to <8>,
in which the carboxy group-containing resin $D^K$ is a polymer having a crosslinking structure.

<12> The ink jet recording method according to any one of <1> to <11>,
in which the permeable substrate is decorative paper for a decorative plate.

<13> A manufacturing method of a melamine decorative plate, comprising:

a step of obtaining decorative paper on which an image is recorded, using the ink jet recording method according to <12>; and

a step of infusing the decorative paper on which the image is recorded with a melamine resin.

<14> A melamine decorative plate manufactured by the manufacturing method of a melamine decorative plate according to <13>.

According to one embodiment of the present disclosure, there is provided an ink jet recording method in which an image has a high yellow density and jettability of an ink is excellent.

According to another embodiment of the present disclosure, there are provided a manufacturing method of a melamine decorative plate and a melamine decorative plate, which are obtained by the above-described ink jet recording method.

BRIEF DESCRIPTION OF THE DRAWINGS

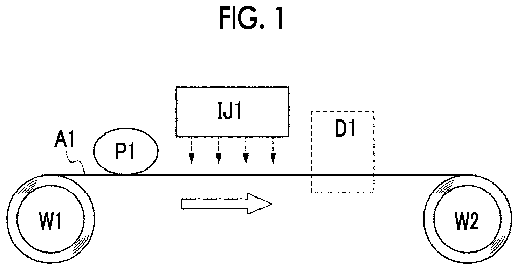

Fig. 1 is a view conceptually showing an example of an ink jet recording device used for the ink jet recording method according to the present disclosure.

DESCRIPTION OF THE PREFERRED EMBODIMENTS

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, "image" means general films, and "image recording" means formation of the image (that is, the film). In addition, the concept of "image" in the present specification also includes a solid image.

In the present specification, a concept of "(meth)acrylate" includes both acrylate and methacrylate, and a concept of "(meth)acrylic acid" includes both acrylic acid and methacrylic acid.

Ink Jet Recording Method

The ink jet recording method according to the present disclosure includes a step of applying, onto a permeable substrate having an air permeability resistance of 5 seconds to 50 seconds according to a Gurley method, a pretreatment liquid which contains at least one coagulating agent selected from the group consisting of an organic acid having a molecular weight of less than 1000 and a polyvalent metal salt, and water (hereinafter, also referred to as "pretreatment liquid applying step"); and a step of applying a yellow ink onto a region of the permeable substrate, onto which the pretreatment liquid has been applied, by an ink jet recording system (hereinafter, also referred to as "yellow ink applying step"). The yellow ink contains water, an organic solvent having a boiling point of 250°C or higher, PY110, and a carboxy group-containing resin $D^Y$, and a content of the organic solvent having a boiling point of 250°C or higher is 15% by mass to 40% by mass with respect to the total amount of the yellow ink.

The ink jet recording method according to the present disclosure may include other steps as necessary.

In general, in a case where yellow ink is applied onto a permeable substrate, the yellow ink permeates the permeable substrate, and a yellow density is likely to decrease.

On the other hand, in the ink jet recording method according to the present disclosure, by providing the pretreatment liquid applying step before the yellow ink applying step, the carboxy group-containing resin $D^Y$ contained in the yellow ink is aggregated by the coagulating agent contained in the pretreatment liquid, and the permeation of PY110 into the permeable substrate is suppressed. As a result, it is possible to obtain an image having a higher yellow density than in the related art.

In addition, in the ink jet recording method according to the present disclosure, since the content of the organic solvent having a boiling point of 250°C or higher is 15% by mass to 40% by mass with respect to the total amount of the yellow ink, generation of aggregates due to drying of the yellow ink in the vicinity of the nozzle is suppressed. As a result, jettability is excellent.

JP2022-001621A and US2016/0214395A do not disclose a relationship between the pretreatment liquid applying step and the yellow density.

Hereinafter, each step of the ink jet recording method according to the present disclosure will be described.

Pretreatment Liquid Applying Step

The ink jet recording method according to the present disclosure includes the pretreatment liquid applying step.

The pretreatment liquid applying step is a step of applying, onto a permeable substrate having an air permeability resistance of 5 seconds to 50 seconds according to a Gurley method, a pretreatment liquid which contains at least one coagulating agent selected from the group consisting of an organic acid having a molecular weight of less than 1000 and a polyvalent metal salt, and water.

Permeable Substrate

The substrate used in the ink jet recording method according to the present disclosure is a permeable substrate having an air permeability resistance of 5 seconds to 50 seconds according to a Gurley method.

In the ink jet recording method according to the present disclosure, since the pretreatment liquid applying step is provided in a case where a predetermined yellow ink is used, the yellow density of the image can be increased even in a case where the permeable substrate is used.

The air permeability resistance according to the Gurley method is measured by a method described in JIS P 8117:2009.

Examples of the permeable substrate include decorative paper, plain paper, high-quality paper, and recycled paper.

It is preferable that the permeable substrate does not have an ink receiving layer on a surface thereof.

Coated papers such as art paper and coating paper, which are usually commercially available, do not correspond to the above-described permeable substrate.

The permeable substrate preferably includes paper.

The permeable substrate including paper may be a commercially available product.

Examples of the commercially available product include high-quality paper (A) such as "OK Prince High Quality" manufactured by Oji Paper Co., Ltd., "Shiraoi" manufactured by Nippon Paper Industries Co., Ltd., and "New NPI high-quality" manufactured by Nippon Paper Industries Co., Ltd.; and form paper such as "NPi Form" manufactured by Nippon Paper Industries Co., Ltd.

In addition, the permeable substrate is preferably decorative paper for a decorative plate. Examples of the decorative plate include a high-pressure melamine decorative plate, a low-pressure melamine decorative plate, a polyester decorative plate, and a DAP decorative plate.

The decorative paper may be a commercially available product.

Examples of the commercially available product include MPK3007, MPK7299, and MPK 9653 manufactured by Felix Schoeller; and KCW-801P, KSH-801P, and KW-1001P manufactured by KJ SPECIALTY PAPER Co., Ltd.

With the ink jet recording method according to the present disclosure, an image having a high yellow density and having a wood-grain tone can be recorded.

Pretreatment Liquid

The pretreatment liquid contains at least one coagulating agent selected from the group consisting of an organic acid having a molecular weight of less than 1,000 and a polyvalent metal salt, and water.

Water

The pretreatment liquid contains water.

A content of the water is preferably 60% by mass or more, and more preferably 70% by mass or more with respect to the total amount of the pretreatment liquid.

The upper limit of the content of the water depends on amounts of other components, but is preferably 90% by mass or less and more preferably 85% by mass or less with respect to the total amount of the pretreatment liquid.

Coagulating Agent

The pretreatment liquid according to the present disclosure contains at least one coagulating agent selected from the group consisting of an organic acid having a molecular weight of less than 1,000 and a polyvalent metal salt.

From the viewpoint of improving the yellow density, the coagulating agent preferably includes an organic acid having a molecular weight of less than 1,000.

The molecular weight of the organic acid can be calculated from the type and the number of atoms constituting the compound.

The organic acid is an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the coagulating rate of the ink, as the acidic group, a phosphoric acid group or a carboxy group is preferable, and a carboxy group is more preferable.

It is preferable that at least a part of the acidic group is dissociated in the pretreatment liquid.

Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of aggregation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

It is preferable that at least a part of the polyvalent metal salt is dissociated into polyvalent metal ions and counter ions in the pretreatment liquid.

A content of the coagulating agent in the pretreatment liquid is preferably 1.0% by mass to 30% by mass, more preferably 3.0% by mass to 25% by mass, and still more preferably 5.0% by mass to 20% by mass with respect to the total amount of the pretreatment liquid.

Organic Solvent

The pretreatment liquid may contain at least one organic solvent.

The type of the organic solvent is not particularly limited, and examples thereof include monoalcohol having 1 to 4 carbon atoms; diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; triol such as glycerin, 1,2,6-hexanetriol, and trimethylolpropane; alkylene glycol such as ethylene glycol and propylene glycol; alkylene glycol monoalkyl ether such as ethylene glycol monoalkyl ether and propylene glycol monoalkyl ether; polyalkylene glycol such as diethylene glycol, triethylene glycol, tetraethylene glycol, pentaethylene glycol, dipropylene glycol, and polyoxyethylene polyoxypropylene glycol; polyalkylene glycol ether such as diethylene glycol monoalkyl ether, triethylene glycol monoalkyl ether, tripropylene glycol monoalkyl ether, and polyoxypropylene glyceryl ether; and 2-pyrrolidone and N-methyl-2-pyrrolidone.

A content of the organic solvent is preferably 1% by mass to 20% by mass and more preferably 3% by mass to 10% by mass with respect to the total amount of the pretreatment liquid.

Surfactant

The pretreatment liquid may contain at least one surfactant.

The type of the surfactant is not particularly limited, and may be any of an anionic surfactant, a cationic surfactant, a betaine-based surfactant, or a nonionic surfactant. In addition, examples of the surfactant include an acrylic surfactant, a fluorine-based surfactant, and a silicone-based surfactant.

The surfactant may function as an antifoaming agent.

A content of the surfactant is preferably 0.01% by mass to 6% by mass and more preferably 0.1% by mass to 4% by mass with respect to the total amount of the pretreatment liquid.

Other Components

The pretreatment liquid may contain other components as necessary, in addition to the above-described components.

Examples of other components which can be contained in the pretreatment liquid include known additives such as a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

Physical Properties of Pretreatment Liquid

A pH of the pretreatment liquid is preferably 0.2 to 7.0, more preferably 0.5 to 6.0, and still more preferably 1.0 to 5.0.

Here, the pH means a pH at 25°C.

The pH is measured at 25°C using, for example, a pH meter (for example, a pH meter manufactured by DKK-Toa Corporation (model number "HM-31")).

A viscosity of the pretreatment liquid is preferably 0.5 mPa·s to 20 mPa·s, and more preferably 1 mPa·s to 10 mPa·s. The viscosity is a value measured at 25°C using a viscometer. The viscosity is measured at 25°C using a viscometer, for example, a TV-22 type viscometer manufactured by Toki Sangyo Co., Ltd.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension is measured at 25°C using a surface tension meter, for example, by a plate method using an automatic surface tension meter (product name "CBVP-Z") manufactured by Kyowa Interface Science Co., Ltd.

Application of Pretreatment Liquid

A method of applying the pretreatment liquid is not particularly limited, and examples thereof include known methods such as a coating method, a dipping method, and an ink jet recording system.

Examples of the coating method include known coating methods using a bar coater, an extrusion die coater, an air doctor coater, a blade coater, a rod coater, a knife coater, a squeeze coater, a reverse roll coater, or the like.

An application amount of the pretreatment liquid is preferably 0.1 $g/m^2$ to 20 $g/m^2$, more preferably 0.5 $g/m^2$ to 10 $g/m^2$, and still more preferably 1 $g/m^2$ to 5 $g/m^2$.

An application amount of the coagulating agent applied onto the permeable substrate is preferably 0.08 $g/m^2$ to 0.35 $g/m^2$, more preferably 0.10 $g/m^2$ to 0.31 $g/m^2$, and still more preferably 0.12 $g/m^2$ to 0.27 $g/m^2$.

The application amount of the coagulating agent means an application mass ($g/m^2$) per area of 1 $m^2$.

The application amount of the coagulating agent can be calculated based on an application amount ($g/m^2$) of the pretreatment liquid and the content (% by mass) of the coagulating agent contained in the pretreatment liquid. The application amount of the coagulating agent can be adjusted by adjusting at least one of the application amount of the pretreatment liquid or the content of the coagulating agent contained in the pretreatment liquid.

In a case where the application amount of the coagulating agent is 0.08 $g/m^2$ or more, the coagulating agent reacts with the carboxy group-containing resin $D^Y$ contained in the yellow ink, and an effect of retaining PY110 on the surface of the ink film is high. The effect of suppressing the permeation of PY110 into the permeable substrate is high, and the yellow density of the image is improved.

In addition, in a case where the application amount of the coagulating agent is 0.35 $g/m^2$ or less, due to the action of the coagulating agent, the PY110's are not excessively aggregated and can be uniformly present in an in-plane direction of the ink film. In general, in a case where the PY110's are aggregated and the density is high, a color tone of the obtained image tends to be reddish. By allowing the PY110 to be uniformly present in the in-plane direction of the ink film, it is possible to suppress the occurrence of color unevenness in which a reddish color tone is present in the yellow color tone in the image.

Heating and Drying Pretreatment Liquid

The pretreatment liquid applying step may include applying the pretreatment liquid onto the permeable substrate and heating and drying the pretreatment liquid applied onto the permeable substrate.

Examples of a unit for heating and drying the pretreatment liquid include known heating units such as a heater, known blowing units such as a dryer, and units combining these.

Examples of the method for heating and drying the pretreatment liquid include a method of applying heat from a side of the permeable substrate opposite to the surface onto which the pretreatment liquid has been applied using a heater or the like, a method of applying warm air or hot air to the surface of the permeable substrate onto which the pretreatment liquid has been applied, a method of applying heat from the surface of the permeable substrate onto which the pretreatment liquid has been applied or from a side of the permeable substrate opposite to the surface onto which the pretreatment liquid has been applied using an infrared heater, and a method of combining a plurality of these methods.

A heating temperature during the heating and drying of the pretreatment liquid is preferably 40°C or higher, and more preferably 45°C or higher.

The upper limit value of the heating temperature is not particularly limited, and is, for example, 150°C.

A heating time is not particularly limited, but is preferably 0.1 seconds to 30 seconds, more preferably 0.2 seconds to 10 seconds, and particularly preferably 0.5 seconds to 5 seconds.

Yellow Ink Applying Step

The ink jet recording method according to the present disclosure includes the yellow ink applying step.

The yellow ink applying step is a step of applying a yellow ink onto a region of the permeable substrate, onto which the pretreatment liquid has been applied, by an ink jet recording system.

In the present step, the yellow ink is applied onto the region of the permeable substrate, onto which the pretreatment liquid has been applied, so that the components (for example, PY110) in the yellow ink are aggregated by the action of the coagulating agent on the permeable substrate, and an image is obtained.

Yellow Ink

The yellow ink contains water, an organic solvent having a boiling point of 250°C or higher, PY110, and a carboxy group-containing resin $D^Y$.

Water

A content of the water is preferably 20% by mass or more, more preferably 30% by mass or more, and still more preferably 40% by mass or more with respect to the total amount of the yellow ink.

The upper limit value of the content of the water depends on amounts of other components. The upper limit value of the content of the water with respect to the total amount of the yellow ink is, for example, 90% by mass or 80% by mass.

PY110

The yellow ink contains PY110. The PY110 has excellent light resistance.

The yellow ink may contain a yellow pigment other than the PY110.

A proportion of the PY110 in the yellow pigment is preferably 80% by mass or more, and more preferably 90% by mass or more.

It is still more preferable that the yellow pigment contained in the yellow ink according to the present disclosure is only the PY110.

An average particle diameter of the PY110 in the yellow ink is preferably 100 nm to 160 nm, more preferably 110 nm to 150 nm, and still more preferably 110 nm to 140 nm.

In a case where the average particle diameter thereof is 100 nm or more, the light resistance is excellent.

In a case where the average particle diameter thereof is 160 nm or less, the yellow density is improved.

In addition, in a case where the yellow ink reacts with the coagulating agent contained in the pretreatment liquid, the local aggregation of PY110 is suppressed. As a result, color unevenness including a reddish color tone is suppressed. Furthermore, aggregates are less likely to be generated inside the nozzle, and the jettability is excellent.

The average particle diameter is a value measured by a grain size distribution measuring device (for example, Microtrac UPA (registered trademark) EX150 manufactured by NIKKISO CO., LTD.).

A content of the PY110 is preferably 2.0% by mass to 8.0% by mass, more preferably 2.5% by mass to 7.0% by mass, and still more preferably 3.5% by mass to 6.0% by mass with respect to the total amount of the yellow ink.

Carboxy Group-Containing Resin $D^Y$

The yellow ink according to the present disclosure contains a carboxy group-containing resin $D^Y$.

In the present disclosure, a resin refers to a compound having a weight-average molecular weight (Mw) of 1,000 or more.

In the present disclosure, the weight-average molecular weight (Mw) means a value measured by gel permeation chromatography (GPC). For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID $\times$ 15 cm, manufactured by Tosoh Corporation) are used as a column, and tetrahydrofuran (THF) is used as an eluent. In addition, the measurement is performed under measurement conditions of a sample concentration of 0.45% by mass, a flow rate of 0.35 ml/min, a sample injection volume of 10 $\mu$l, and a measurement temperature of 40°C using an RI detector. A calibration curve is created using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).

The carboxy group-containing resin $D^Y$ is not particularly limited as long as it is a resin (polymer) containing a carboxy group.

A form of the resin is not particularly limited, and may be any of a random polymer, a block polymer, or a graft polymer. In addition, the carboxy group-containing resin $D^Y$ may be a polymer having a crosslinking structure or a polymer having no crosslinking structure.

The carboxy group-containing resin $D^Y$ is preferably a copolymer having a structural unit derived from a monomer containing a carboxy group (hereinafter, referred to as "carboxy group-containing monomer"). The structural unit derived from the carboxy group-containing monomer included in the copolymer may be used alone, or two or more kinds thereof may be used.

Examples of the carboxy group-containing monomer include (meth)acrylic acid, $\beta$-carboxyethyl acrylate, fumaric acid, itaconic acid, maleic acid, and crotonic acid.

From the viewpoint of dispersion stability, as the carboxy group-containing monomer, (meth)acrylic acid or B-carboxyethyl acrylate is preferable, and (meth)acrylic acid is more preferable.

A content of the structural unit derived from the carboxy group-containing monomer is preferably 5% by mass to 40% by mass, more preferably 10% by mass to 35% by mass, and still more preferably 10% by mass to 30% by mass with respect to the total amount of the carboxy group-containing resin $D^Y$.

The carboxy group-containing resin $D^Y$ preferably has a structural unit derived from a monomer having a hydrophobic group (hereinafter, referred to as "hydrophobic monomer"), in addition to the structural unit derived from the carboxy group-containing monomer. The structural unit derived from the hydrophobic monomer included in the carboxy group-containing resin $D^Y$ may be used alone, or two or more kinds thereof may be used.

Examples of the hydrophobic monomer include (meth)acrylate having an alkyl group having 1 to 20 carbon atoms, (meth)acrylate having an aromatic ring (for example, benzyl (meth)acrylate, phenoxyethyl (meth)acrylate, and the like), styrene, and styrene derivative.

From the viewpoint of dispersion stability, an acid value of the carboxy group-containing resin $D^Y$ is preferably 50 mgKOH/g to 250 mgKOH/g, more preferably 70 mgKOH/g to 240 mgKOH/g, and still more preferably 90 mgKOH/g to 230 mgKOH/g.

In the present disclosure, the acid value can be measured by titration of an indicator, and is a value measured by a method described in Japanese Industrial Standards (JIS K 0070: 1992).

A weight-average molecular weight (Mw) of the carboxy group-containing resin $D^Y$ is preferably 1,000 to 100,000, more preferably 5,000 to 80,000, and still more preferably 10,000 to 50,000.

The carboxy group-containing resin $D^Y$ preferably functions as a dispersing agent for dispersing the PY110 in the yellow ink.

In a case where the carboxy group-containing resin $D^Y$ is a polymer having no crosslinking structure, as the yellow ink reacts with the coagulating agent contained in the pretreatment liquid, the PY110's do not aggregate too much, and the color unevenness including a reddish color tone can be suppressed.

From the above-described viewpoint, the carboxy group-containing resin $D^Y$ is preferably a polymer having no crosslinking structure.

A mass ratio Y of the content of the carboxy group-containing resin $D^Y$ to the content of the PY110 is preferably 0.25 to 0.80 and more preferably 0.25 to 0.60.

In a case where the mass ratio Y is 0.25 or more, the PY110 is appropriately dispersed by the carboxy group-containing resin $D^Y$, and the dispersion stability is excellent. As a result, aggregates are less likely to be generated inside the nozzle, and the jettability is excellent.

In a case where the mass ratio Y is 0.80 or less, as the yellow ink reacts with the coagulating agent contained in the pretreatment liquid, the PY110's do not aggregate too much, and the color unevenness including a reddish color tone is suppressed.

Organic Solvent

The yellow ink contains an organic solvent (high-boiling point solvent) having a boiling point of 250°C or higher.

In a case where the high-boiling point solvent is contained, the jettability of the yellow ink is improved.

In the present disclosure, the boiling point means a boiling point at 1 atm (101,325 Pa).

Examples of the organic solvent having a boiling point of 250°C or higher include glycerin (boiling point: 290°C), triethylene glycol (boiling point: 285°C), tripropylene glycol (boiling point: 267°C), trimethylolpropane (boiling point: 295°C), and triethylene glycol monobutyl ether (boiling point: 276°C).

From the viewpoint of jettability of the yellow ink, the content of the high-boiling point solvent is 15% by mass to 40% by mass, preferably 17% by mass to 35% by mass and more preferably 20% by mass to 30% by mass with respect to the total amount of the yellow ink.

The yellow ink may contain an organic solvent (low-boiling point solvent) having a boiling point of lower than 250°C.

Examples of a water-soluble organic solvent having a boiling point of lower than 250°C include 1,2-propanediol (boiling point: 188°C), 1,3-propanediol (boiling point: 213°C), propylene glycol monomethyl ether (boiling point: 121°C), ethylene glycol (boiling point: 197°C), ethylene glycol monomethyl ether (boiling point: 124°C), propylene glycol monoethyl ether (boiling point: 133°C), ethylene glycol monoethyl ether (boiling point: 135°C), propylene glycol monopropyl ether (boiling point: 149°C), ethylene glycol monopropyl ether (boiling point: 151°C), propylene glycol monobutyl ether (boiling point: 170°C), ethylene glycol monobutyl ether (boiling point: 171°C), 2-ethyl-1-hexanol (boiling point: 187°C), dipropylene glycol monomethyl ether (boiling point: 188°C), diethylene glycol dimethyl ether (boiling point: 162°C), diethylene glycol diethyl ether (boiling point: 188°C), dipropylene glycol dimethyl ether (boiling point: 175°C), 1,2-hexanediol (boiling point: 223°C), diethylene glycol (boiling point: 245°C), diethylene glycol monobutyl ether (boiling point: 230°C), dipropylene glycol (boiling point: 232°C), 2-pyrrolidone (boiling point: 245°C), tripropylene glycol monomethyl ether (boiling point: 243°C), and triethylene glycol monomethyl ether (boiling point: 248°C).

From the viewpoint of jettability, a content of the low-boiling point solvent is preferably 5% by mass to 25% by mass and more preferably 10% by mass to 20% by mass with respect to the total amount of the yellow ink.

From the viewpoint of jettability, a mass ratio of the content of the low-boiling point solvent to the content of the high-boiling point solvent is preferably 0.1 to 1.5 and more preferably 0.3 to 1.2.

Surfactant

The yellow ink preferably contains at least one surfactant.

The type of the surfactant is not particularly limited, and may be any of an anionic surfactant, a cationic surfactant, a betaine-based surfactant, or a nonionic surfactant.

In addition, examples of the surfactant include an acrylic surfactant, a fluorine-based surfactant, and a silicone-based surfactant.

Among these, the yellow ink preferably contains at least one surfactant (hereinafter, also referred to as "surfactant W") selected from an acetylene compound or a polyoxyalkylene alkyl ether.

In a case where the yellow ink contains the surfactant W, as the yellow ink reacts with the coagulating agent contained in the pretreatment liquid, the PY110 can be uniformly present in the in-plane direction of the ink film. Therefore, the color unevenness including a reddish color tone is suppressed.

Examples of the acetylene compound include an acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol; and an ethylene oxide adduct of the acetylene glycol.

The acetylene compound can be synthesized, for example, by reacting acetylene with a ketone or an aldehyde corresponding to a desired acetylene glycol.

The acetylene compound can be obtained, for example, by a method described in "Introduction of New Surfactants" (published by Sanyo Chemical Industries, Ltd., completely revised edition, 1992) written by Takehiko Fujimoto, pp. 94 to 107.

The acetylene compound may be a commercially available product.

Examples of the commercially available product of the acetylene compound include SURFYNOL 104E (HLB value: 4), SURFYNOL 104H (HLB value: 4), SURFYNOL 104A (HLB value: 4), SURFYNOL 104PA (HLB value: 4), SURFYNOL 104PG-50 (HLB value: 4), SURFYNOL 104S (HLB value: 4), SURFYNOL 420 (HLB value: 4), SURFYNOL 440 (HLB value: 8), SURFYNOL 465 (HLB value: 13), SURFYNOL 485 (HLB value: 17), SURFYNOL SE (HLB value: 6), SURFYNOL SE-F (HLB value: 6), SURFYNOL 61 (HLB value: 6), SURFYNOL 82 (HLB value: 4), SURFYNOL DF110D (HLB value: 3), DYNOL 604 (HLB value: 8), DYNOL 607 (HLB value: 8), SURFYNOL 2502 (HLB value: 8), SURFYNOL TG (HLB value: 9), OLFINE E1004 (HLB value: 7 to 9), and OLFINE E1010 (HLB value: 13 to 14) (all of which are manufactured by Evonik Industries AG); and ACETYLENOL E00, ACETYLENOL E13T, ACETYLENOL E40, ACETYLENOL E60, ACETYLENOL E100, and ACETYLENOL E200 (all of which are manufactured by Kawaken Fine Chemicals Co., Ltd.).

As the polyoxyalkylene alkyl ether, an ethylene oxide adduct of an alcohol or an ethylene oxide and propylene oxide adduct of an alcohol is preferable, and an ethylene oxide adduct of an alcohol (that is, a polyoxyethylene alkyl ether compound) is more preferable.

As the polyoxyalkylene alkyl ether, a compound represented by Formula (1) is still more preferable.

$$R^1O\text{-}[(EO)_m/(PO)_n]\text{-}H \ldots \text{Formula (1)}$$

In Formula (1), $R^1$ represents a hydrocarbon group having 6 to 30 carbon atoms, EO represents an ethyleneoxy group, and PO represents a propyleneoxy group.

In Formula (1), m and n represent an average number of added moles, m is 2 to 100, n is 0 to 50, and the total of m and n is 2 to 120.

In Formula (1), the notation "$(EO)_m/(PO)_n$" indicates that the arrangement of EO and PO may be an arrangement of a random copolymer or an arrangement of a block copolymer. In the moiety indicated as "$(EO)_m/(PO)_n$", the addition order of EO and PO is not limited.

In Formula (1), in a case where n is 2 or more, the compound represented by Formula (1) may be a block copolymer or a random copolymer. In a case where the compound represented by Formula (1) is a block copolymer, a compound in which an oxyethylene group is disposed on a hydroxy group side, that is, RO-(PO)(EO)-H is preferable.

In addition, in a case where the compound represented by Formula (1) is a block copolymer, the compound may be a triblock copolymer of RO-(EO)(PO)(EO)-H.

Examples of a commercially available product of the polyoxyalkylene alkyl ether compound include, as an ethylene oxide adduct of lauryl alcohol, EMULGEN 102 (HLB: 6.3, average number of added moles of EO: 2), EMULGEN 103 (HLB: 8.1, average number of added moles of EO: 3), EMULGEN 103 (HLB: 9.7, average number of added moles of EO: 4), EMULGEN 108 (HLB: 12.1, average number of added moles of EO: 6), EMULGEN 109P (HLB: 13.6, average number of added moles of EO: 8), EMULGEN 120 (HLB: 15.3, average number of added moles of EO: 13), EMULGEN 147 (HLB: 16.3, average number of added moles of EO: 17), and EMULGEN 150 (HLB: 18.4, average number of added moles of EO: 44) manufactured by Kao Corporation; and as an ethylene oxide adduct of a secondary alcohol having 12 carbon atoms, TERGITOL TMN-3 (HLB: 8.1, average number of added moles of EO: 3), TRITON HW-1000 (HLB: 10, average number of added moles of EO: 6), TERGITOL TMN-6 (HLB: 13.1, average number of added moles of EO: 8), TERGITOL TMN-100X (HLB: 14.0, average number of added moles of EO: 9), and TERGITOL TMN-10 (HLB: 14.4, average number of added moles of EO: 10) manufactured by Dow Chemical Company.

In addition, examples of the commercially available product of the polyoxyalkylene alkyl ether compound also include EMULGEN 707 (an ethylene oxide adduct of a secondary alcohol having 11 to 15 carbon atoms; HLB: 12.1, average number of added moles of EO: 6) and EMULGEN 220 (an ethylene oxide adduct of a linear primary alcohol having 16 to 18 carbon atoms; HLB: 14.2, average number of added moles of EO: 13) manufactured by Kao Corporation.

A content of the surfactant W is preferably 0.1% by mass to 2% by mass and more preferably 0.3% by mass to 1% by mass with respect to the total amount of the yellow ink.

The yellow ink may contain a surfactant other than the surfactant W. From the viewpoint of suppressing the color unevenness including a reddish color tone, it is preferable that the yellow ink contains only the surfactant W as the surfactant.

Other Components

The yellow ink may contain other components as necessary, in addition to the above-described components.

Examples of other components which can be contained in the yellow ink include known additives such as resin particles, a water-soluble resin, colloidal silica, a solid wetting agent, an inorganic salt, a fading inhibitor, an emulsion stabilizer, a penetration enhancer, an ultraviolet absorber, a preservative, an antibacterial agent, a pH adjuster, a viscosity adjuster, a rust inhibitor, and a chelating agent.

It is preferable that the yellow ink does not substantially contain resin particles. In a case where the yellow ink does not contain resin particles, aggregates are less likely to be generated inside the nozzle, and the jettability is excellent. The "not substantially contain" means that a content of the resin particles is 0.5% by mass or less with respect to the total amount of the yellow ink. The content of the resin particles is more preferably 0.1% by mass or less.

Physical Properties of Yellow Ink

A pH (25°C) of the yellow ink is preferably 7.0 to 10.0, more preferably 7.5 to 9.5, and still more preferably 8.0 to 9.0.

The pH of the yellow ink is measured in the same manner as the pH of the pretreatment liquid.

A viscosity (30°C) of the yellow ink is preferably 2.0 mPa·s to 15.0 mPa·s, more preferably 3.0 mPa·s to 10.0 mPa·s, and still more preferably 3.5 mPa·s to 7.0 mPa·s. The viscosity of the yellow ink is measured in the same manner as the viscosity of the pretreatment liquid.

A surface tension of the yellow ink is preferably 60 mN/m or less, more preferably 20 mN/m to 55 mN/m, and still more preferably 30 mN/m to 45 mN/m.

The surface tension of the yellow ink is measured in the same manner as the surface tension of the pretreatment liquid.

An absolute value of a difference between the surface tension of the yellow ink and the surface tension of the pretreatment liquid is preferably 10 mN/m or less, and more preferably 5 mN/m or less.

In a case where a value obtained by subtracting the surface tension of the yellow ink from the surface tension of the pretreatment liquid is 0 mN/m to 10 mN/m, a decrease in yellow density is suppressed.

In a case where the value obtained by subtracting the surface tension of the pretreatment liquid from the surface tension of the yellow ink is 0 mN/m to 10 mN/m, the PY110 can be uniformly present in the in-plane direction of the ink film, and the color unevenness including a reddish color tone is suppressed.

Application of Yellow Ink by Ink Jet Recording System

As the ink jet recording system, a known method can be applied.

Examples of the ink jet recording system include an electric charge control method of ejecting ink by using an electrostatic attraction force; a drop-on-demand method (pressure pulse method) of using a vibration pressure of a piezo element; an acoustic ink jet method of converting an electric signal into an acoustic beam, irradiating ink, and ejecting the ink using a radiation pressure; and a thermal ink jet (Bubble jet (registered trademark)) method of heating ink to form air bubbles and utilizing the generated pressure.

Examples of an ink jet head used in the ink jet recording system include ink jet heads for a shuttle method of using short serial heads which are caused to scan a recording medium in a width direction of the substrate so as to perform recording and ink jet heads for a line method of using line heads which each consist of recording elements arranged for the entire area of each side of a recording medium.

In the line method, the pattern can be formed on the entire surface of the recording medium by scanning the recording medium in the direction intersecting the arrangement direction of the recording elements, and a transport system such as a carriage which scans the short head is unnecessary. In addition, in the line method, complicated scanning control between the movement of the carriage and the recording medium is unnecessary, and only the recording medium moves, so that the recording speed can be increased as compared with the shuttle method.

A liquid droplet volume of the ink jetted from the ink jet head is preferably 1 pL (picoliter) to 100 pL, more preferably 1.5 pL to 80 pL, and still more preferably 1.8 pL to 50 pL.

An application amount of the yellow ink is preferably 1 $g/m^2$ to 20 $g/m^2$, more preferably 2 $g/m^2$ to 14 $g/m^2$, and still more preferably 3 $g/m^2$ to 8 $g/m^2$.

The ink jet recording method according to the present disclosure may include a step of heating and drying the yellow ink applied onto the permeable substrate after the yellow ink applying step.

Examples of a unit for heating and drying include known heating units such as a heater, known blowing units such as a dryer, and units combining these.

Specific examples of the method for heating the permeable substrate include a method of applying heat from a side of the permeable substrate opposite to the surface onto which the yellow ink has been applied using a heater or the like, a method of applying warm air or hot air to the surface of the permeable substrate onto which the yellow ink has been applied, a method of applying heat from the surface of the permeable substrate onto which the yellow ink has been applied or from a side of the permeable substrate opposite to the surface onto which the yellow ink has been applied using an infrared heater, and a method of combining a plurality of these methods.

A heating temperature during the heating and drying of the yellow ink is preferably 55°C or higher, more preferably 60°C or higher, and particularly preferably 65°C or higher.

The upper limit value of the heating temperature is not particularly limited, and is, for example, 150°C.

A heating time is not particularly limited, but is preferably 0.1 seconds to 60 seconds, more preferably 0.5 seconds to 30 seconds, and particularly preferably 1.0 second to 10 seconds.

Magenta Ink Applying Step

The ink jet recording method according to the present disclosure includes a magenta ink applying step.

The magenta ink applying step is a step of applying a magenta ink onto a region of the permeable substrate, onto which the pretreatment liquid has been applied, by an ink jet recording system.

In the present step, by applying the magenta ink together with the yellow ink onto the region of the permeable substrate, onto which the pretreatment liquid has been applied, it is difficult to visually recognize the color unevenness including a reddish color tone based on the PY110.

Magenta Ink

The magenta ink preferably contains water, a magenta pigment, and a carboxy group-containing resin $D^M$.

Water

A content of the water is preferably 20% by mass or more, more preferably 30% by mass or more, and still more preferably 40% by mass or more with respect to the total amount of the magenta ink.

The upper limit value of the content of the water depends on amounts of other components. The upper limit value of the content of the water with respect to the total amount of the magenta ink is, for example, 90% by mass or 80% by mass.

Magenta Pigment

It is preferable that the magenta ink according to the present disclosure contains a magenta pigment.

Examples of the magenta pigment include C. I. Pigment Red 122, 150, 171, 175, 177, 209, 224, 242, 254, 255, and 264; and C. I. Pigment Violet 19, 23, and 32.

Among these, the magenta pigment preferably includes C. I. Pigment Red 254 (PR254).

The PR254 has a strong redness. Therefore, in a case where the magenta ink including the PR254 is used in combination with the yellow ink, the color unevenness including a reddish color tone based on the PY110 is less likely to be visually recognized.

A proportion of the PR254 in the magenta pigment is preferably 80% by mass or more, and more preferably 90% by mass or more.

It is still more preferable that the magenta pigment contained in the magenta ink according to the present disclosure is only the PR254.

A content of the magenta pigment is preferably 2.0% by mass to 8.0% by mass and more preferably 3.0% by mass to 6.0% by mass with respect to the total amount of the magenta ink.

Carboxy Group-Containing Resin $D^M$

The magenta ink preferably contains a carboxy group-containing resin $D^M$.

The carboxy group-containing resin $D^M$ is not particularly limited as long as it is a resin (polymer) containing a carboxy group.

A form of the resin is not particularly limited, and may be any of a random polymer, a block polymer, or a graft polymer. In addition, the carboxy group-containing resin $D^M$ may be a polymer having a crosslinking structure or a polymer having no crosslinking structure.

A preferred aspect of the carboxy group-containing resin $D^M$ is the same as the preferred aspect of the carboxy group-containing resin $D^Y$.

The carboxy group-containing resin $D^M$ preferably functions as a dispersing agent for dispersing the magenta pigment in the magenta ink.

In a case where the carboxy group-containing resin $D^M$ is a polymer having a crosslinking structure, as the magenta ink reacts with the coagulating agent contained in the pretreatment liquid, the magenta pigments are likely to aggregate with each other, and a magenta density is improved.

By using the yellow ink and the magenta ink in combination, the color unevenness including a reddish color tone based on the PY110 is less likely to be visually recognized. In addition, a contrast between the yellow color tone and the magenta color tone is increased, and particularly, in a case of recording a wood-grain image, designability is enhanced.

From the viewpoint of suppressing the color unevenness including a reddish color tone and enhancing the designability, the carboxy group-containing resin $D^M$ is preferably a polymer having a crosslinking structure.

A mass ratio M of the content of the carboxy group-containing resin $D^M$ to the content of the magenta pigment is preferably 0.20 to 0.80 and more preferably 0.25 to 0.70.

Organic Solvent and Surfactant

The magenta ink may contain at least one organic solvent.

The magenta ink may contain at least one surfactant.

Preferred aspects of the organic solvent and the surfactant contained in the magenta ink are the same as the preferred aspects of the organic solvent and the surfactant contained in the yellow ink.

Other Components

The magenta ink may contain other components as necessary, in addition to the above-described components.

Examples of other components contained in the magenta ink include the same components as those contained in the yellow ink.

A method of applying the magenta ink by the ink jet recording system is the same as the method of applying the yellow ink by the ink jet recording system.

In addition, a step of heating and drying the magenta ink applied onto the permeable substrate after the magenta ink applying step may be included.

A preferred aspect of the step of heating and drying the magenta ink is the same as the preferred aspect of the step of heating and drying the yellow ink.

Black Ink Applying Step

The ink jet recording method according to the present disclosure includes a black ink applying step.

The black ink applying step is a step of applying a black ink onto a region of the permeable substrate, onto which the pretreatment liquid has been applied, by an ink jet recording system.

In the present step, by applying the black ink together with the yellow ink onto the region of the permeable substrate, onto which the pretreatment liquid has been applied, a contrast between the yellow color tone and the black color tone is increased, and particularly, in a case of recording a wood-grain image, designability is enhanced.

Black Ink

The black ink preferably contains water, a black pigment, and a carboxy group-containing resin $D^K$.

Water

A content of the water is preferably 20% by mass or more, more preferably 30% by mass or more, and still more preferably 40% by mass or more with respect to the total amount of the black ink.

The upper limit value of the content of the water depends on amounts of other components. The upper limit value of the content of the water with respect to the total amount of the black ink is, for example, 90% by mass or 80% by mass.

Black Pigment

The black ink according to the present disclosure preferably contains a black pigment.

Examples of the black pigment include carbon black, an indazine pigment, and a perylene pigment; and more specific examples thereof include C. I. Pigment Black 1, 7, 31, and 32.

A content of the black pigment is preferably 2.0% by mass to 8.0% by mass and more preferably 3.0% by mass to 6.0% by mass with respect to the total amount of the black ink.

Carboxy Group-Containing Resin $D^K$

The black ink preferably contains a carboxy group-containing resin $D^K$.

The carboxy group-containing resin $D^K$ is not particularly limited as long as it is a resin (polymer) containing a carboxy group.

A form of the resin is not particularly limited, and may be any of a random polymer, a block polymer, or a graft polymer. In addition, the carboxy group-containing resin $D^K$ may be a polymer having a crosslinking structure or a polymer having no crosslinking structure.

A preferred aspect of the carboxy group-containing resin $D^K$ is the same as the preferred aspect of the carboxy group-containing resin $D^Y$.

The carboxy group-containing resin $D^K$ preferably functions as a dispersing agent for dispersing the black pigment in the black ink.

In a case where the carboxy group-containing resin $D^K$ is a polymer having a crosslinking structure, as the black ink reacts with the coagulating agent contained in the pretreatment liquid, the black pigments are likely to aggregate with each other, and a black density is improved.

By using the yellow ink and the black ink in combination, the contrast between the yellow color tone and the black color tone is increased, and particularly, in a case of recording a wood-grain image, designability is enhanced.

From the above-described viewpoint, the carboxy group-containing resin $D^K$ is preferably a polymer having a crosslinking structure.

A mass ratio K of the content of the carboxy group-containing resin $D^K$ to the content of the black pigment is preferably 0.20 to 0.80 and more preferably 0.25 to 0.70.

It is preferable that the mass ratio Y (the mass ratio of the content of the carboxy group-containing resin $D^Y$ to the content of PY110) is smaller than the mass ratio K.

In a case where the mass ratio Y is smaller than the mass ratio K, the color unevenness including a reddish color tone is suppressed in a case where the yellow ink reacts with the coagulating agent contained in the pretreatment liquid. In addition, in a case where the black ink reacts with the coagulating agent contained in the pretreatment liquid, the black pigments are likely to aggregate with each other, and the black density is improved. As a result, the contrast between the yellow hue and the black hue is increased, and particularly, in a case of recording a wood-grain image, the designability is enhanced.

Organic Solvent and Surfactant

The black ink may contain at least one organic solvent.

The black ink may contain at least one surfactant.

Preferred aspects of the organic solvent and the surfactant contained in the black ink are the same as the preferred aspects of the organic solvent and the surfactant contained in the yellow ink.

Other Components

The black ink may contain other components as necessary, in addition to the above-described components.

Examples of other components contained in the black ink include the same components as those contained in the yellow ink.

A method of applying the black ink by the ink jet recording system is the same as the method of applying the yellow ink by the ink jet recording system.

In addition, a step of heating and drying the black ink applied onto the permeable substrate after the black ink applying step may be included.

A preferred aspect of the step of heating and drying the black ink is the same as the preferred aspect of the step of heating and drying the yellow ink.

Hereinafter, an example of an ink jet recording device used in the ink jet recording method according to the present disclosure will be described with reference to the drawing.

In the drawing and description of the present disclosure, substantially the same elements (for example, components or parts) may be designated by the same reference numerals, and redundant description thereof may be omitted.

Fig. 1 is a view conceptually showing an ink jet recording device which is an example of the ink jet recording device used in the ink jet recording method according to the present disclosure.

The ink jet recording device shown in Fig. 1 is an example of an ink jet recording device including a transport mechanism which transports a permeable substrate by a roll-to-roll method, unwinds a long roll-shaped permeable substrate A1 by an unwinding device W1, transports the unwound permeable substrate A1 in a direction of a block arrow, passes the unwound permeable substrate A1 through a pretreatment liquid applying device P1, an ink applying device IJ1, and a drying zone D1 in this order, and finally winds the unwound permeable substrate A1 by a winding device W2.

The pretreatment liquid applying device P1 and the ink applying device IJ1 are arranged on a downstream side of the permeable substrate A1 in a transport direction (hereinafter, also simply referred to as a "downstream side") with respect to the unwinding device W1 for unwinding the permeable substrate A1.

In the pretreatment liquid applying device P1 and the ink applying device IJ1, a pretreatment liquid applying step and an ink applying step are performed.

Details of the pretreatment liquid applying step and the ink applying step are as described above.

A zone (not shown) for drying the pretreatment liquid may be provided between the pretreatment liquid applying device P1 and the ink applying device IJ1.

The ink applying device IJ1 includes at least one ink jet head.

It is preferable that the ink applying device IJ1 includes an ink jet head for black (K) ink, an ink jet head for cyan (C) ink, an ink jet head for magenta (M) ink, and an ink jet head for yellow (Y) ink.

The drying zone D1 is disposed on the downstream side of the ink applying device IJ1.

In the drying zone D1, an ink drying step is performed.

Manufacturing Method of Melamine Decorative Plate

The manufacturing method of a melamine decorative plate according to the present disclosure preferably includes a step of obtaining decorative paper on which an image is recorded (hereinafter, also referred to as "decorative paper manufacturing step") and a step of infusing the decorative paper on which the image is recorded with a melamine resin (hereinafter, also referred to as "infusing step"), using the ink jet recording method according to the present disclosure.

Decorative Paper Manufacturing Step

Details of the decorative paper and the ink jet recording method are as described above.

In the decorative paper manufacturing step, it is preferable to record a wood-grain image on the decorative paper.

Infusing Step

Examples of a method of infusing the decorative paper with a melamine resin include a method of infusing the decorative paper with methylol melamine and then heating the decorative paper. A curing reaction proceeds by heating the methylol melamine, and the melamine resin is obtained.

The decorative paper may be infused with a component other than the melamine resin.

In a case of manufacturing a low-pressure melamine decorative plate, it is preferable to include a step of thermocompression-molding the decorative paper infused with the melamine resin and a woody fiberboard, after the infusing step.

In a case of manufacturing a high-pressure melamine decorative plate, it is preferable to include a step of laminating and thermocompression-molding the decorative paper infused with the melamine resin and a phenol resin-infused core paper, after the infusing step.

Melamine Decorative Plate

The melamine decorative plate according to the present disclosure is manufactured by the manufacturing method for a melamine decorative plate according to the present disclosure.

By infusing the decorative paper on which the image is recorded, which is obtained by the ink jet recording method according to the present disclosure, with a melamine resin, a melamine decorative plate having a high yellow density is obtained. In particular, by recording a wood-grain image on the decorative paper, the designability is excellent.

The melamine decorative plate according to the present disclosure is manufactured using the decorative paper on which an image is recorded, which is obtained by the ink jet recording method according to the present disclosure, and it is difficult to specify a specific structure or physical properties thereof.

Examples

Hereinafter, examples of the present disclosure will be shown, but the present disclosure is not limited to the following examples.

A viscosity was measured at 25°C using a TV-22 type viscometer manufactured by Toki Sangyo Co., Ltd.

A surface tension was measured at 25°C using an automatic surface tension meter (product name "CBVP-Z", manufactured by Kyowa Interface Science Co., Ltd.).

A pH was measured at 25°C using a pH meter (model number "HM-31") manufactured by DKK-Toa Corporation.

Preparation of Pretreatment Liquid

Pretreatment Liquid P1

Synthesis of Water-Soluble Polymer P1

A 20% by mass aqueous solution of a water-soluble polymer P1 was obtained according to s method described in paragraphs [0200] to [0204] of JP2013-001854A.

The water-soluble polymer P1 was a random polymer having a constitutional unit derived from methyl methacrylate, a constitutional unit derived from ethyl acrylate, and a constitutional unit derived from acrylamide-2-methylpropane sulfonic acid sodium salt at a ratio of 60:13:27 (mass ratio).

A weight-average molecular weight Mw of the water-soluble polymer P1 was 45,000.

Preparation of Pretreatment Liquid P1

The following components were mixed to obtain a pretreatment liquid P1.

· Malonic acid (manufactured by FUJIFILM Wako Pure Chemical Corporation) ... 5.6% by mass
· Malic acid (manufactured by FUJIFILM Wako Pure Chemical Corporation) ... 3.8% by mass
· 85% by mass aqueous solution of phosphoric acid (manufactured by FUJIFILM Wako Pure Chemical Corporation) ... 2.9% by mass as amount of phosphoric acid
· DEGmBE: diethylene glycol monobutyl ether (manufactured by FUJIFILM Wako Pure Chemical Corporation) ... 6% by mass
· Water-soluble polymer P1 ... 0.4% by mass as amount of water-soluble polymer
· Benzotriazole (manufactured by FUJIFILM Wako Pure Chemical Corporation) ... 1% by mass
· Sodium dodecylbenzene sulfonate (manufactured by Tokyo Chemical Industry Co., Ltd.) ... 0.4% by mass
· Antifoaming agent (product name "TSA-739", Momentive Performance Materials Inc., 15% by mass aqueous solution) ... 0.01% by mass as amount of silicone oil
· Deionized water ... remaining amount set such that the total amount of the pretreatment liquid was 100% by mass

Pretreatment Liquids P2 to P7

Pretreatment liquids P2 to P7 were obtained by the same method as that for the pretreatment liquid P1, except that the type and content of each component contained in the pretreatment liquid P1 were changed to the type and content shown in Table 1.

Table 1

|  | P1 | P2 | P3 | P4 | P5 | P6 | P7 |
|---|---|---|---|---|---|---|---|
| DEGmBE | 6 | 6 | 6 | 6 | 6 | 6 | 3 |
| Malonic acid | 5.6 | - | 1.7 | 3.8 | 9.5 | 18 | 5.6 |

(continued)

| | P1 | P2 | P3 | P4 | P5 | P6 | P7 |
|---|---|---|---|---|---|---|---|
| Malic acid | 3.8 | - | 1.2 | 2.5 | 6.3 | 10 | 3.8 |
| Calcium formate | - | 9.4 | - | - | - | - | - |
| Phosphoric acid | 2.9 | - | 2.9 | 2.9 | 2.9 | 2.9 | 2.9 |
| Water-soluble polymer P1 | 0.4 | 0.4 | 0.4 | 0.4 | 0.4 | 0.4 | 0.4 |
| Benzotriazole | 1 | 1 | 1 | 1 | 1 | 1 | 1 |
| Sodium dodecyl-benzene sulfo-nate | 0.4 | 0.4 | 0.4 | 0.4 | 0.4 | 0.4 | - |
| Antifoaming agent | 0.01 | 0.01 | 0.01 | 0.01 | 0.01 | 001 | 0.01 |
| Deionized water | Reminder | Reminder | Reminder | Reminder | Reminder | Reminder | Reminder |
| Viscosity (mPa·s) | 1.7 | 1.8 | 1.3 | 1.5 | 2.3 | 3.4 | 1.5 |
| Surface tension (mN/m) | 32 | 32 | 32 | 32 | 32 | 32 | 40 |
| pH | 1.2 | 6.1 | 1.6 | 1.4 | 0.9 | 0.3 | 1.2 |

Preparation of Yellow Ink

Yellow Pigment Dispersion Liquid PY1

As a solid content, 15 parts by mass of a carboxy group-containing resin $D^Y$ (product name "Solsperse 43000", manufactured by Lubrizol Corporation) as a pigment dispersing agent, 45 parts by mass of PY110 (manufactured by Sun Chemical Corporation), 75 parts by mass of water, and 18 parts by mass of propylene glycol were mixed with each other. The mixed solution was dispersed with a beads mill (bead diameter: 0.1 mmφ, zirconia beads) until a desired volume-average particle diameter (130 nm or less) was obtained. The obtained dispersion liquid was subjected to centrifugal treatment at 6,800 G for 20 minutes with a centrifuge to remove coarse particles. Thereafter, deionized water and 0.3 parts by mass of a preservative (product name "Proxel GXL") were added thereto to obtain a yellow pigment dispersion liquid PY1.

A pigment concentration of the yellow pigment dispersion liquid PY1 was 15% by mass. A mass ratio Y of the content of the carboxy group-containing resin $D^Y$ to the content of PY110 was 0.33.

Solsperse 43000 is a polymer having no crosslinking structure (acid value: 120 mgKOH/g, Mw: 21,000). In Table 2, it is described as "Uncrosslinked polymer 1".

The mass ratio Y was measured and calculated by the following method.

A mass of a dried product after drying 1.0 part by mass of the yellow pigment dispersion liquid PY1 at 180°C under a reduced pressure condition (0.1 MPa) for 6 hours was 0.200 parts by mass.

Since the pigment concentration of the yellow pigment dispersion liquid PY1 was 15% by mass, the mass of the pigment was 0.150 parts by mass.

The mass of the carboxy group-containing resin $D^Y$ was calculated as 0.050 parts by mass.

$$\text{Mass ratio Y} = 0.050 \div 0.150 \approx 0.33$$

In yellow pigment dispersion liquids PY2 to PY7 described later, the mass ratio Y was also calculated by the same method as in the yellow pigment dispersion liquid PY1. In addition, a mass ratio M and a mass ratio K were also calculated by the same method as the mass ratio Y.

Yellow Pigment Dispersion Liquid PY2

A yellow pigment dispersion liquid PY2 was obtained by the same method as the yellow pigment dispersion liquid PY1, except that the pigment dispersing agent in the yellow pigment dispersion liquid PY1 was changed to a carboxy group-containing resin $D^Y$ (product name "Joncryl JDX-6180", manufactured by BASF).

A pigment concentration of the yellow pigment dispersion liquid PY2 was 15% by mass.

A mass ratio Y of the content of the carboxy group-containing resin $D^Y$ to the content of PY110 was 0.35.

Joncryl JDX-6180 is a polymer having no crosslinking structure (acid value: 230 mgKOH/g, Mw: 14,000). In Table 2, it is described as "Uncrosslinked polymer 2".

Yellow Pigment Dispersion Liquid PY3

Synthesis of Water-Soluble Polymer Q1

Methacrylic acid (215 parts by mass), benzyl methacrylate (785 parts by mass), and isopropanol (375 parts by mass) were mixed to prepare a monomer feed composition.

In addition, 2,2-azobis(2-methylbutyronitrile) (22.05 parts by mass) and isopropanol (187.5 parts by mass) were mixed to prepare an initiator feed composition.

Next, isopropanol (187.5 parts by mass) was heated to 80°C under a nitrogen atmosphere, and a mixture of the monomer feed composition and the initiator feed composition was added dropwise thereto over 2 hours. After completion of the dropwise addition, the obtained solution was held at 80°C for another 4 hours and then cooled to 25°C. After the cooling, the reaction solution diluted with isopropanol and tetrahydrofuran was added dropwise to water at 10°C, and the precipitated solid was filtered and dried by a reprecipitation method to obtain a water-soluble polymer Q1.

A weight-average molecular weight of the water-soluble polymer Q1 was approximately 30,000, and an acid value thereof was 140 mgKOH/g.

Preparation of Yellow Pigment Dispersion Liquid PY3

0.8 equivalent of the amount of methacrylic acid in the water-soluble polymer Q1 (150 parts by mass) was neutralized with a potassium hydroxide aqueous solution. Deionized water was further added thereto to adjust a concentration of the water-soluble polymer to 20% by mass, thereby obtaining an aqueous solution of the water-soluble polymer Q1. The aqueous solution of the water-soluble polymer Q1 (80 parts by mass), PY110 (manufactured by Sun Chemical Corporation) (48 parts by mass), water (75 parts by mass), and dipropylene glycol (30 parts by mass) were mixed with each other. The mixed solution was dispersed with a beads mill (bead diameter: 0.1 mmφ, zirconia beads) until a target volume-average particle diameter (130 nm or less) was obtained. Deionized water was added to obtain a dispersion liquid (uncrosslinked dispersion liquid) in which PY110 was dispersed by the water-soluble polymer Q1. A concentration of PY110 in the uncrosslinked dispersion liquid was 15% by mass.

Trimethylolpropane polyglycidyl ether (product name, "Denacol EX-321", manufactured by Nagase ChemteX Corporation) (0.7 parts by mass) as a crosslinking agent and a boric acid aqueous solution (boric acid concentration: 4% by mass) (7.2 parts by mass) were added to the uncrosslinked dispersion liquid (136 parts by mass), and the solution was allowed to react at 50°C for 6 and a half hours and cooled to 25°C, whereby the water-soluble polymer Q1 was crosslinked by the crosslinking agent.

In this manner, a dispersion liquid (crosslinked dispersion liquid) containing PY110 and the crosslinked water-soluble polymer Q1 was obtained.

Next, deionized water was added to the obtained crosslinked dispersion liquid, and ultrafiltration was performed using an ultrafiltration device (manufactured by Sartorius AG, Sartocon Slice 200) and an ultrafiltration filter (manufactured by Sartorius AG, Sartocon Slice Casse, molecular weight cut-off: 100,000).

After the concentration of dipropylene glycol in the crosslinked dispersion liquid was adjusted to 0.1% by mass or less, the dispersion liquid was concentrated until the pigment concentration reached 15% by mass. Thereafter, 0.3 parts by mass of a preservative (product name "Proxel GXL") was added thereto to obtain a yellow pigment dispersion liquid PY3.

The yellow pigment dispersion liquid PY3 contained the crosslinked water-soluble polymer Q1 (hereinafter, also referred to as "crosslinked polymer 1") as the carboxy group-containing resin $D^Y$.

A pigment concentration of the yellow pigment dispersion liquid PY3 was 15% by mass. A mass ratio Y of the content of the carboxy group-containing resin $D^Y$ to the content of PY110 was 0.34.

Yellow Pigment Dispersion Liquid PY4

A yellow pigment dispersion liquid PY4 was obtained by the same method as the yellow pigment dispersion liquid PY1, except that the blending amount of the carboxy group-containing resin $D^Y$ in the yellow pigment dispersion liquid PY1 was changed to 4.5 parts by mass as a solid content.

A pigment concentration of the yellow pigment dispersion liquid PY4 was 15% by mass. A mass ratio Y of the content of the carboxy group-containing resin $D^Y$ to the content of PY110 was 0.11.

Yellow Pigment Dispersion Liquid PY5

A yellow pigment dispersion liquid PY5 was obtained by the same method as the yellow pigment dispersion liquid PY1, except that the blending amount of the carboxy group-containing resin $D^Y$ in the yellow pigment dispersion liquid PY1 was changed to 30 parts by mass as a solid content.

A pigment concentration of the yellow pigment dispersion liquid PY5 was 15% by mass. A mass ratio Y of the content of the carboxy group-containing resin $D^Y$ to the content of PY110 was 0.65.

Yellow Pigment Dispersion Liquid PY6

A yellow pigment dispersion liquid PY6 was obtained by the same method as the yellow pigment dispersion liquid PY1, except that the blending amount of the carboxy group-containing resin $D^Y$ in the yellow pigment dispersion liquid PY1 was changed to 45 parts by mass as a solid content.

A pigment concentration of the yellow pigment dispersion liquid PY6 was 15% by mass. A mass ratio Y of the content of the carboxy group-containing resin $D^Y$ to the content of PY110 was 0.99.

Yellow Pigment Dispersion Liquid PY7

A yellow pigment dispersion liquid PY7 was obtained by the same method as the yellow pigment dispersion liquid PY1, except that the mixed solution was dispersed with a beads mill (bead diameter: 0.1 mmφ, zirconia beads) until a desired volume-average particle diameter (190 nm or less) was obtained.

A pigment concentration of the yellow pigment dispersion liquid PY7 was 15% by mass. A mass ratio Y of the content of the carboxy group-containing resin $D^Y$ to the content of PY110 was 0.34.

Yellow Ink Y1

The following components were mixed to obtain a mixed solution. Next, coarse particles were removed from the above-described mixed solution using a 1 μm filter, thereby obtaining a yellow ink Y1.

· Yellow pigment dispersion liquid PY1 (aqueous dispersion liquid having a pigment concentration of 15% by mass) ... amount set such that the content of the pigment in the yellow ink was 3.9% by mass
· Organic solvent: glycerin, manufactured by FUJIFILM Wako Pure Chemical Corporation, boiling point: 290°C ... 23.0% by mass
· Organic solvent: propylene glycol (PG), manufactured by ADEKA CORPORATION, boiling point: 188°C ... 15.0% by mass
· Surfactant: acetylene compound 1 (product name "SURFYNOL 465", manufactured by Nissin Chemical Co., Ltd.) ... 0.8% by mass
· Antifoaming agent (product name "BYK-024", manufactured by BYK-Chemie GmbH) ... 0.01% by mass
· Colloidal silica (product name "ST-XS", manufactured by Nissan Chemical Corporation) ... 0.05% by mass as solid content
· Water ... remaining amount set such that the total amount of the yellow ink was 100% by mass

Yellow Inks Y2 to Y15

Yellow inks Y2 to Y15 were obtained by the same method as the yellow ink Y1, except that the type and content of each component contained in the yellow ink Y1 were changed to the type and content shown in Table 2.

Details of the components described in Table 2 are as follows.

· Organic solvent: triethylene glycol monobutyl ether (TEGmBE), manufactured by FUJIFILM Wako Pure Chemical Corporation, boiling point: 276°C
· Surfactant: acetylene compound 2 (product name "DYNOL 604", manufactured by Nissin Chemical Co., Ltd.)
· Surfactant: polyoxyethylene lauryl ether (product name "EMULGEN 120", manufactured by Kao Corporation)
· Surfactant: silicone compound (trade name "BYK-347", manufactured by BYK-Chemie GmbH)

Table 2

| | | Y1 | Y2 | Y3 | Y4 | Y5 | Y6 | Y7 | Y8 | Y9 | Y10 | Y11 | Y12 | Y13 | Y14 | Y15 |
|---|---|---|---|---|---|---|---|---|---|---|---|---|---|---|---|---|
| Yellow dispersion liquid | Type | PY1 | PY1 | PY2 | PY3 | PY4 | PY5 | PY6 | PY1 | PY1 | PY1 | PY1 | PY1 | PY7 | PY1 | PY1 |
| Pigment | Type | PY110 | PY110 | PY110 | PY110 | PY110 | PY110 | PY110 | PY110 | PY110 | PY110 | PY110 | PY110 | PY110 | PY110 | PY110 |
| | Content (% by mass) | 3.9 | 3.9 | 3.9 | 3.9 | 3.9 | 3.9 | 3.9 | 3.9 | 3.9 | 3.9 | 3.9 | 3.9 | 3.9 | 3.9 | 3.9 |
| Carboxy group-containing resin | Type | Uncrosslinked polymer 1 | Uncrosslinked polymer 1 | Uncrosslinked polymer 2 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 | Uncrosslinked polymer 1 |
| | Content (% by mass) | 1.3 | 1.3 | 1.35 | 1.33 | 0.44 | 2.55 | 3.87 | 1.3 | 1.3 | 1.3 | 1.3 | 1.3 | 1.33 | 1.3 | 1.3 |
| Organic solvent | Glycerin (boiling point: 290°C) | 23 | - | 23 | 23 | 23 | 23 | 23 | 23 | 23 | 23 | 23 | 23 | 23 | 35 | 10 |
| | TEGmBE (boiling point: 276°C) | - | 23 | - | - | - | - | - | - | - | - | - | - | - | - | - |
| | PG (boiling point: 188°C) | 15 | 15 | 15 | 15 | 15 | 15 | 15 | 15 | 15 | 15 | 15 | 15 | 15 | 15 | 15 |
| Surfactant | Acetylene compound 1 | 0.8 | 0.8 | 0.8 | 0.8 | 0.8 | 0.8 | 0.8 | - | - | - | - | 0.2 | 0.8 | 0.8 | 0.8 |
| | Acetylene compound 2 | - | - | - | - | - | - | - | 0.8 | - | - | - | - | - | - | - |
| | Polyoxyethylene lauryl ether | - | - | - | - | - | - | - | - | 0.8 | - | - | - | - | - | - |
| | Silicone compound | - | - | - | - | - | - | - | - | - | - | 0.8 | - | - | - | - |
| Other components | Antifoaming agent | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Colloidal silica | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Surface tension (mN/m) | | 34 | 34 | 34 | 34 | 34 | 34 | 34 | 28 | 36 | 50 | 24 | 44 | 34 | 34 | 34 |
| Average particle diameter (nm) | | 125 | 124 | 119 | 124 | 122 | 128 | 130 | 127 | 123 | 123 | 126 | 125 | 180 | 119 | 125 |
| Mass ratio Y | | 0.33 | 0.33 | 0.35 | 0.34 | 0.11 | 0.65 | 0.99 | 0.33 | 0.33 | 0.33 | 0.33 | 0.33 | 0.34 | 0.33 | 0.33 |

Preparation of Magenta Ink

Magenta Pigment Dispersion Liquid PM1

The above-described aqueous solution of the water-soluble polymer Q1 (80 parts by mass), PR254 (product name "Irgazin Red L3630", manufactured by Sun Chemical Corporation) (40 parts by mass), water (75 parts by mass), and dipropylene glycol (30 parts by mass) were mixed with each other. The mixed solution was dispersed with a beads mill (bead diameter: 0.1 mm$\varphi$, zirconia beads) until a target volume-average particle diameter (130 nm or less) was obtained. Deionized water was added to obtain a dispersion liquid (uncrosslinked dispersion liquid) in which PR254 was dispersed by the water-soluble polymer Q1. A concentration of PR254 in the uncrosslinked dispersion liquid was 16% by mass.
A crosslinking treatment was performed on the uncrosslinked dispersion liquid by the same method as in the yellow pigment dispersion liquid PY3 to obtain a magenta pigment dispersion liquid PM1.
The magenta pigment dispersion liquid PM1 contained the crosslinked polymer 1 as a carboxy group-containing resin $D^M$.
A pigment concentration of the magenta pigment dispersion liquid PM1 was 16% by mass.
A mass ratio M of the content of the carboxy group-containing resin $D^M$ to the content of PR254 was 0.41.

Magenta Pigment Dispersion Liquid PM2

A magenta pigment dispersion liquid PM2 was obtained by the same method as the magenta pigment dispersion liquid PM1, except that PR254 was changed to C. I. Pigment Red 122 (product name "Chromofine Red", manufactured by Dainichiseika Color & Chemicals Mfg. Co., Ltd., PR122) in the magenta pigment dispersion liquid PM1.
A pigment concentration of the magenta pigment dispersion liquid PM2 was 16% by mass.
A mass ratio M of the content of the carboxy group-containing resin $D^M$ to the content of PR122 was 0.39.

Magenta Pigment Dispersion Liquid PM3

A magenta pigment dispersion liquid PM3 was obtained by the same method as the magenta pigment dispersion liquid PM1, except that PR254 was changed to C. I. Pigment Violet (product name "Inkjet Magenta E5B02", manufactured by Clariant, PV19) in the magenta pigment dispersion liquid PM1.
A pigment concentration of the magenta pigment dispersion liquid PM3 was 16% by mass.
A mass ratio M of the content of the carboxy group-containing resin $D^M$ to the content of PV19 was 0.40.

Magenta Ink M1

The following components were mixed to obtain a mixed solution. Next, coarse particles were removed from the above-described mixed solution using a 1 $\mu$m filter, thereby obtaining a magenta ink M1.

· Magenta pigment dispersion liquid PM1 (aqueous dispersion liquid having a pigment concentration of 16% by mass) ... amount set such that the content of the pigment in the magenta ink was 4% by mass
· Organic solvent: glycerin, manufactured by FUJIFILM Wako Pure Chemical Corporation, boiling point: 290°C ... 20.0% by mass
· Organic solvent: propylene glycol (PG), manufactured by ADEKA CORPORATION, boiling point: 188°C ... 15.0% by mass
· Surfactant: acetylene compound (product name "SURFYNOL 465", manufactured by Nissin Chemical Co., Ltd.) ... 0.9% by mass
· Antifoaming agent (product name "BYK-024", manufactured by BYK-Chemie GmbH) ... 0.01% by mass
· Colloidal silica (product name "ST-XS", manufactured by Nissan Chemical Corporation) ... 0.05% by mass as solid content
· Water ... remaining amount set such that the total amount of the magenta ink was 100% by mass

Magenta Inks M2 and M3

Magenta inks M2 and M3 were obtained by the same method as the magenta ink M1, except that the type and content of each component contained in the magenta ink M1 were changed to the type and content shown in Table 3.

Preparation of Black Ink

Black Pigment Dispersion Liquid PK1

The above-described aqueous solution of the water-soluble polymer Q1 (80 parts by mass), P. I. Pigment Black 7 (product name "Carbon Black NIPEX160-IQ", manufactured by Orion Engineered Carbons, PB7) (40 parts by mass), water (75 parts by mass), and dipropylene glycol (30 parts by mass) were mixed with each other. The mixed solution was dispersed with a beads mill (bead diameter: 0.1 mmφ, zirconia beads) until a target volume-average particle diameter (130 nm or less) was obtained. Deionized water was added to obtain a dispersion liquid (uncrosslinked dispersion liquid) in which PB7 was dispersed by the water-soluble polymer Q1. A concentration of PB7 in the uncrosslinked dispersion liquid was 14% by mass.

A crosslinking treatment was performed on the uncrosslinked dispersion liquid by the same method as in the yellow pigment dispersion liquid PY3 to obtain a black pigment dispersion liquid PK1.

The black pigment dispersion liquid PK1 contained the crosslinked polymer 1 as a carboxy group-containing resin $D^K$.

A pigment concentration of the black pigment dispersion liquid PK1 was 14% by mass.

A mass ratio K of the content of the carboxy group-containing resin $D^K$ to the content of PB7 was 0.41.

Black Pigment Dispersion Liquid PK2

A black pigment dispersion liquid PK2 was obtained by the same method as the black pigment dispersion liquid PK1, except that the blending amount of PB7 in the black pigment dispersion liquid PK1 was changed to 48 parts by mass.

A pigment concentration of the black pigment dispersion liquid PK2 was 14% by mass.

A mass ratio K of the content of the carboxy group-containing resin $D^K$ to the content of PB7 was 0.33.

Black Pigment Dispersion Liquid PK3

A black pigment dispersion liquid PK3 was obtained by the same method as the black pigment dispersion liquid PK1, except that the blending amount of PB7 in the black pigment dispersion liquid PK1 was changed to 70 parts by mass.

A pigment concentration of the black pigment dispersion liquid PK3 was 14% by mass.

A mass ratio K of the content of the carboxy group-containing resin $D^K$ to the content of PB7 was 0.21.

Black Ink K1

The following components were mixed to obtain a mixed solution. Next, coarse particles were removed from the above-described mixed solution using a 1 μm filter, thereby obtaining a black ink K1.

· Black pigment dispersion liquid PK1 (aqueous dispersion liquid having a pigment concentration of 14% by mass) ... amount set such that the content of the pigment in the black ink was 4.4% by mass
· Organic solvent: glycerin, manufactured by FUJIFILM Wako Pure Chemical Corporation, boiling point: 290°C ... 18.0% by mass
· Organic solvent: propylene glycol (PG), manufactured by ADEKA CORPORATION, boiling point: 188°C ... 15.0% by mass
· Surfactant: acetylene compound 1 (product name "SURFYNOL 465", manufactured by Nissin Chemical Co., Ltd.) ... 1.0% by mass
· Antifoaming agent (product name "BYK-024", manufactured by BYK-Chemie GmbH) ... 0.01% by mass
· Colloidal silica (product name "ST-XS", manufactured by Nissan Chemical Corporation) ... 0.05% by mass as solid content
· Water ... remaining amount set such that the total amount of the black ink was 100% by mass

Black Inks K2 and K3

Black inks K2 and K3 were obtained by the same method as the black ink K1, except that the type and content of each component contained in the black ink K1 were changed to the type and content shown in Table 3.

Preparation of Cyan Ink

Cyan Pigment Dispersion Liquid PC1

The above-described aqueous solution of the water-soluble polymer Q1 (80 parts by mass), C. I. Pigment Blue 15:3 (product name "TRB2", manufactured by Dainichiseika Color & Chemicals Mfg. Co., Ltd., PB15:3) (50 parts by mass), water (75 parts by mass), and dipropylene glycol (30 parts by mass) were mixed with each other.

The mixed solution was dispersed with a beads mill (bead diameter: 0.1 mmφ, zirconia beads) until a target volume-average particle diameter (130 nm or less) was obtained. Deionized water was added to obtain a dispersion liquid (uncrosslinked dispersion liquid) in which PB15:3 was dispersed by the water-soluble polymer Q1. A concentration of PB15:3 in the uncrosslinked dispersion liquid was 14% by mass.

A crosslinking treatment was performed on the uncrosslinked dispersion liquid by the same method as in the yellow pigment dispersion liquid PY3 to obtain a cyan pigment dispersion liquid PC1.

The cyan pigment dispersion liquid PC1 contained the crosslinked polymer 1 as a carboxy group-containing resin $D^C$.

A pigment concentration of the cyan pigment dispersion liquid PC1 was 14% by mass.

A mass ratio C of the content of the carboxy group-containing resin $D^C$ to the content of PB15:3 was 0.32.

Cyan Ink C1

The following components were mixed to obtain a mixed solution. Next, coarse particles were removed from the above-described mixed solution using a 1 μm filter, thereby obtaining a black ink K1.

· Cyan pigment dispersion liquid PC1 (aqueous dispersion liquid having a pigment concentration of 14% by mass) ... amount set such that the content of the pigment in the cyan ink was 3% by mass

· Organic solvent: glycerin, manufactured by FUJIFILM Wako Pure Chemical Corporation, boiling point: 290°C ... 22.0% by mass

· Organic solvent: propylene glycol (PG), manufactured by ADEKA CORPORATION, boiling point: 188°C ... 15.0% by mass

· Surfactant: acetylene compound 1 (product name "SURFYNOL 465", manufactured by Nissin Chemical Co., Ltd.) ... 0.8% by mass

· Antifoaming agent (product name "BYK-024", manufactured by BYK-Chemie GmbH) ... 0.01% by mass

· Colloidal silica (product name "ST-XS", manufactured by Nissan Chemical Corporation) ... 0.05% by mass as solid content

· Water ... remaining amount set such that the total amount of the cyan ink was 100% by mass

Table 3

| | | M1 | M2 | M3 | K1 | K2 | K3 | C1 |
|---|---|---|---|---|---|---|---|---|
| Magenta dispersion liquid | | PM1 | PM2 | PM3 | - | - | - | - |
| Black dispersion liquid | | - | - | - | PK1 | PK2 | PK3 | |
| Cyan dispersion liquid | | - | - | - | - | - | - | PC1 |
| Pigment | Type | PR254 | PR122 | PV19 | PBk7 | PBk7 | PBk7 | PB15:3 |
| | Content (% by mass) | 4 | 4 | 4 | 4.4 | 4.4 | 4.4 | 3 |
| Carboxy group-containing resin | Type | Crosslinked polymer 1 | Crosslinked polymer 1 | Crosslinked polymer 1 | Crosslinked polymer 1 | Crosslinked polymer 1 | Crosslinked polymer 1 | Crosslinked polymer 1 |
| | Content (% by mass) | 1.63 | 1.55 | 1.6 | 1.79 | 1.45 | 0.94 | 0.96 |
| Organic solvent | Glycerin (boiling point: 290°C) | 20 | 20 | 20 | 18 | 18 | 18 | 22 |
| | PG (boiling point: 188°C) | 15 | 15 | 15 | 15 | 15 | 15 | 15 |
| Surfactant | Acetylene compound 1 | 0.9 | 0.9 | 0.9 | 1 | 1 | 1 | 0.8 |
| Other components | Antifoaming agent | 0.01 | 0.01 | 0.01 | 0.01 | 0.01 | 0.01 | 0.01 |
| | Colloidal silica | 0.05 | 0.05 | 0.05 | 0.05 | 0.05 | 0.05 | 0.05 |
| Surface tension (mN/m) | | 34 | 34 | 34 | 34 | 34 | 34 | 34 |
| Average particle diameter (nm) | | 123 | 124 | 125 | 122 | 125 | 124 | 119 |
| Mass ratio M | | 0.41 | 0.39 | 0.4 | - | - | - | - |
| Mass ratio K | | - | - | - | 0.41 | 0.33 | 0.21 | - |
| Mass ratio C | | - | - | - | - | - | - | 0.32 |

Examples 1 to 24 and Comparative Examples 1 and 2

An ink jet recording device having the same configuration as the ink jet recording device shown in Fig. 1 was prepared. An image recorded material was obtained using the pretreatment liquid, the yellow ink, the magenta ink, and the black ink shown in Table 4.

Table 4

| | Pretreatment liquid | Yellow ink | Magenta ink | Black ink |
|---|---|---|---|---|
| Example 1 | P1 | Y1 | M1 | K1 |
| Example 2 | P2 | Y1 | M1 | K1 |
| Example 3 | P3 | Y1 | M1 | K1 |
| Example 4 | P4 | Y1 | M1 | K1 |
| Example 5 | P5 | Y1 | M1 | K1 |
| Example 6 | P6 | Y1 | M1 | K1 |
| Example 7 | P1 | Y2 | M1 | K1 |
| Example 8 | P1 | Y3 | M1 | K1 |
| Example 9 | P1 | Y4 | M1 | K1 |
| Example 10 | P1 | Y5 | M1 | K1 |
| Example 11 | P1 | Y6 | M1 | K1 |
| Example 12 | P1 | Y7 | M1 | K1 |
| Example 13 | P1 | Y8 | M1 | K1 |
| Example 14 | P1 | Y9 | M1 | K1 |
| Example 15 | P1 | Y11 | M1 | K1 |
| Example 16 | P1 | Y10 | M1 | K1 |
| Example 17 | P7 | Y11 | M1 | K1 |
| Example 18 | P1 | Y12 | M1 | K1 |
| Example 19 | P1 | Y13 | M1 | K1 |
| Example 20 | P1 | Y14 | M1 | K1 |
| Example 21 | P1 | Y1 | M2 | K1 |
| Example 22 | P1 | Y1 | M3 | K1 |
| Example 23 | P1 | Y1 | M1 | K2 |
| Example 24 | P1 | Y1 | M1 | K3 |
| Comparative Example 1 | - | Y1 | M1 | K1 |
| Comparative Example 2 | P1 | Y15 | M1 | K1 |

Pretreatment Liquid Applying Step

The pretreatment liquid was applied to the entire surface of the substrate using a roll coater equipped with an anilox roller (line number: 100 to 300 /inch) such that the application amount was 1.8 g/m$^2$.

Pretreatment Liquid Drying Step

Next, the substrate coated with the pretreatment liquid was dried by blowing air with a drying fan while being heated with a contact-type planar heater from a rear surface side of the substrate (a side opposite to the surface on which the image of the substrate was recorded) under the following conditions.

· Drying method: blast drying
· Wind speed: 10 m/s
· Heating temperature: temperature at which the surface temperature on the side of the surface of the substrate on which the image was recorded was 50°C

Ink Applying Step

As each ink jet head in the ink jet recording device, an ink jet recording line head "Samba PH G3L HF (RJC Gen2)" (manufactured by FUJIFILM Dimatix Inc.) was used. The prepared black ink, cyan ink, magenta ink, and yellow ink were filled in first, second, third, and fourth ink jet heads, respectively, and positions of the heads were adjusted such that the ink droplets jetted from the respective ink jet heads overlapped each other.

Thereafter, each ink was jetted onto the substrate to which the pretreatment liquid had been applied by an ink jet recording system under the following conditions to record an image, thereby obtaining an image recorded material. The ink was dried while transporting the substrate onto which the ink had been applied. Detailed conditions of the ink jet recording are as follows.

· Substrate: product name "MPK7299", manufactured by Felix Schoeller (air permeability resistance according to Gurley method: 12 seconds)
· Transport mechanism of substrate: roll to roll
· Temperature of ink jet head: 30°C
· Resolution of ink jet head: 1200 dot per inch (dpi) × 1200 dpi · Amount of liquid droplet jetted: 3.0 pL
· Transportation speed: 50 m/min
· Heating method: heating roller

Ink Drying Step

Next, the substrate was transported to a drying area, and the substrate onto which the ink had been applied was blown by a drying fan while being heated by a contact-type planar heater from the rear surface side of the substrate, and dried under the following conditions.

· Drying method: blast drying
· Wind speed: 15 m/s
· Temperature: temperature at which the surface temperature on the side of the surface of the substrate on which the image was recorded was 80°C

Evaluation

Yellow Density

In the above-described ink jet recording, a solid image of yellow color with a duty of 100% was recorded to obtain an image recorded material. A yellow density of the solid image area of the obtained image recorded material was measured using a spectrophotometer (product name "FD-7", manufactured by Konica Minolta, Inc.). The evaluation standard was as follows. A rank of 2 or higher is in a practically acceptable range.

4: yellow density was more than 0.55.
3: yellow density was more than 0.50 and 0.55 or less.
2: yellow density was more than 0.45 and 0.50 or less.
1: yellow density was 0.45 or less.

Jettability

Using the yellow ink, a nozzle check pattern, which was a solid image of a duty of 100%, was continuously recorded in a region of a length of 2,000 m of the substrate. The last 10 m of the image recorded portion was cut, and the number of nozzle missing was visually observed in the nozzle check pattern. The evaluation standard was as follows.

3: number of nozzles missing was 0 or 1.
2: number of nozzle missing was 2 to 5.
1: number of nozzles missing was 6 or more.

Evaluation of Redness Unevenness 1 (Yellow Image)

A yellow tone gradation image in 10 levels from a duty of 10% to 100% was recorded using the pretreatment liquid and the yellow ink. The image of the obtained image recorded material was visually observed. The evaluation standard was as follows. A rank of 2 or higher is in a practically acceptable range.

4: redness unevenness was not observed in the entire image, and the image was uniform.
3: slight redness unevenness was observed in a region from a duty of 80% to 100% in a case of being observed closely.

2: redness unevenness was observed in a region from a duty of 40% to 100%.

1: clear redness unevenness was observed in the entire image.

Evaluation of Redness Unevenness 2 (Yellow + Magenta Image)

The pretreatment liquid, the magenta ink, and the yellow ink were used, and the magenta ink was drawn in a duty of 3% to 30% and the yellow ink was drawn in a duty of 10% to 100% to record a gradation image in 10 levels. The image of the obtained image recorded material was visually observed. The evaluation standard was as follows. A rank of 2 or higher is in a practically acceptable range.

4: redness unevenness was not observed in the entire image, and the image was uniform.

3: slight redness unevenness was observed in a region of the yellow image from a duty of 80% to 100% in a case of being observed closely.

2: redness unevenness was observed in a region of the yellow image from a duty of 40% to 100%.

1: clear redness unevenness was observed in the entire image.

Contrast (Black Density in Yellow Color Tone)

The pretreatment liquid, the black ink, and the yellow ink were used, and a solid image in which the black ink was drawn at a duty of 100% and then the yellow ink was continuously superimposed and drawn at a duty of 30% was recorded. A visual density (V density) of the image of the obtained image recorded material was measured using a spectrophotometer (product name "FD-7", manufactured by Konica Minolta, Inc.). The evaluation standard was as follows. A rank of 2 or higher is in a practically acceptable range.

4: visual density was more than 1.10.

3: visual density was more than 0.90 and 1.10 or less.

2: visual density was more than 0.70 and 0.90 or less.

1: visual density was 0.70 or less.

Table 5 shows details of the pretreatment liquid, the yellow ink, the magenta ink, and the black ink, and evaluation results.

In Table 5, "Mass ratio Y" indicates the mass ratio of the content of the carboxy group-containing resin $D^Y$ to the content of PY110. "Mass ratio K" indicates the mass ratio of the content of the carboxy group-containing resin $D^K$ to the content of the black pigment. "Difference in surface tension" indicates the absolute value of the difference between the surface tension of the yellow ink and the surface tension of the pretreatment liquid. "High-boiling point solvent" indicates an organic solvent having a boiling point of 250°C or higher.

Table 5

| | Pretreatment liquid | | | Yellow ink | | | | | | | | Difference in surface tension (mN/m) | Magenta ink | Black ink | Evaluation | | | | |
| | Coagulating agent | | Sur-face tension (mN/m) | Aver-age particle size of PY110 (nm) | Carboxy group-containing resin D$^Y$ | Mass ratio Y | High-boiling point solvent | | Surfactant | Surface tension (mN/m) | | | Pigment | Mass ratio K | Yellow densi-ty | Jettabil-ity | Redness uneven-ness 1 | Redness uneven-ness 2 | Con-trast |
| | Type | Applica-tion amount (g/m$^2$) | | | | | Type | Con-tent (% by mass) | | | | | Type | | | | | | |
|---|---|---|---|---|---|---|---|---|---|---|---|---|---|---|---|---|---|---|---|
| Example 1 | Malonic acid/malic acid | 0.17 | 32 | 125 | Uncros-slinked poly-mer 1 | 0.33 | Glycerin | 23 | Acetylene compound 1 | 34 | 2 | PR254 | 0.41 | 4 | 3 | 4 | 4 | 4 |
| Example 2 | Calcium formate | 0.17 | 32 | 125 | Uncros-slinked poly-mer 1 | 0.33 | Glycerin | 23 | Acetylene compound 1 | 34 | 2 | PR254 | 0.41 | 3 | 3 | 4 | 4 | 3 |
| Example 3 | Malonic acid/malic acid | 0.05 | 32 | 125 | Uncros-slinked poly-mer 1 | 0.33 | Glycerin | 23 | Acetylene compound 1 | 34 | 2 | PR254 | 0.41 | 2 | 3 | 4 | 4 | 2 |
| Example 4 | Malonic acid/malic acid | 0.11 | 32 | 125 | Uncros-slinked poly-mer 1 | 0.33 | Glycerin | 23 | Acetylene compound 1 | 34 | 2 | PR254 | 0.41 | 3 | 3 | 4 | 4 | 3 |
| Example 5 | Malonic acid/malic acid | 0.28 | 32 | 125 | Uncros-slinked poly-mer 1 | 0.33 | Glycerin | 23 | Acetylene compound 1 | 34 | 2 | PR254 | 0.41 | 4 | 3 | 4 | 3 | 4 |
| Example 6 | Malonic acid/malic acid | 0.5 | 32 | 125 | Uncros-slinked poly-mer 1 | 0.33 | Glycerin | 23 | Acetylene compound 1 | 34 | 2 | PR254 | 0.41 | 4 | 3 | 3 | 3 | 4 |
| Example 7 | Malonic acid/malic acid | 0.17 | 32 | 124 | Uncros-slinked poly-mer 1 | 0.33 | TEGmB-E | 23 | Acetylene com-pound 1 | 34 | 2 | PR254 | 0.41 | 4 | 3 | 4 | 4 | 4 |
| Example 8 | Malonic acid/malic acid | 0.17 | 32 | 119 | Uncros-slinked poly-mer 2 | 0.35 | Glycerin | 23 | Acetylene compound 1 | 34 | 2 | PR254 | 0.41 | 4 | 3 | 4 | 4 | 4 |
| Example 9 | Malonic acid/malic acid | 0.17 | 32 | 124 | Crosslinked polymer 1 | 0.34 | Glycerin | 23 | Acetylene compound 1 | 34 | 2 | PR254 | 0.41 | 4 | 3 | 3 | 3 | 4 |

| | Pretreatment liquid | | | Yellow ink | | | | | | | | Difference in surface tension (mN/m) | Magenta ink | Black ink | Evaluation | | | | |
| | Coagulating agent | | Sur-face tension (mN/m) | Aver-age particle size of PY110 (nm) | Carboxy group-containing resin D$^Y$ | Mass ratio Y | High-boiling point solvent | | Surfactant | Surface tension (mN/m) | | Pigment | Mass ratio K | Yellow densi-ty | Jettabil-ity | Redness uneven-ness 1 | Redness uneven-ness 2 | Con-trast |
| | Type | Applica-tion amount (g/m²) | | | | | Type | Con-tent (% by mass) | | | | Type | | | | | | |
|---|---|---|---|---|---|---|---|---|---|---|---|---|---|---|---|---|---|---|
| Example 10 | Malonic acid/malic acid | 0.17 | 32 | 122 | Uncros-slinked poly-mer 1 | 0.11 | Glycerin | 23 | Acetylene compound 1 | 34 | 2 | PR254 | 0.41 | 3 | 2 | 4 | 4 | 4 |
| Example 11 | Malonic acid/malic acid | 0.17 | 32 | 128 | Uncros-slinked poly-mer 1 | 0.65 | Glycerin | 23 | Acetylene compound 1 | 34 | 2 | PR254 | 0.41 | 4 | 3 | 4 | 4 | 4 |
| Example 12 | Malonic acid/malic acid | 0.17 | 32 | 130 | Uncros-slinked poly-mer 1 | 0.99 | Glycerin | 23 | Acetylene compound 1 | 34 | 2 | PR254 | 0.41 | 4 | 3 | 3 | 3 | 4 |
| Example 13 | Malonic acid/malic acid | 0.17 | 32 | 127 | Uncros-slinked poly-mer 1 | 0.33 | Glycerin | 23 | Acetylene compound 2 | 28 | 4 | PR254 | 0.41 | 4 | 3 | 4 | 4 | 4 |
| Example 14 | Malonic acid/malic acid | 0.17 | 32 | 123 | Uncros-slinked poly-mer 1 | 0.33 | Glycerin | 23 | Polyoxyethylene lauryl ether | 36 | 4 | PR254 | 0.41 | 4 | 3 | 4 | 4 | 4 |
| Example 15 | Malonic acid/malic acid | 0.17 | 32 | 126 | Uncros-slinked poly-mer 1 | 0.33 | Glycerin | 23 | Silicone compound | 24 | 8 | PR254 | 0.41 | 4 | 3 | 3 | 3 | 4 |
| Example 16 | Malonic acid/malic acid | 0.17 | 32 | 123 | Uncros-slinked poly-mer 1 | 0.33 | Glycerin | 23 | - | 50 | 18 | PR254 | 0.41 | 4 | 3 | 2 | 2 | 4 |
| Example 17 | Malonic acid/malic acid | 0.17 | 40 | 126 | Uncros-slinked poly-mer 1 | 0.33 | Glycerin | 23 | Silicone compound | 24 | 16 | PR254 | 0.41 | 3 | 3 | 3 | 3 | 4 |
| Example 18 | Malonic acid/malic acid | 0.17 | 32 | 125 | Uncros-slinked poly-mer 1 | 0.33 | Glycerin | 23 | Acetylene compound 1 | 44 | 12 | PR254 | 0.41 | 4 | 3 | 3 | 3 | 4 |

(continued)

| | Pretreatment liquid | | | Yellow ink | | | | | | | | Difference in surface tension (mN/m) | Magenta ink | Black ink | Evaluation | | | | |
| | Coagulating agent | | Sur-face tension (mN/m) | Aver-age particle size of PY110 (nm) | Carboxy group-containing resin D$^Y$ | Mass ratio Y | High-boiling point solvent | | Surfactant | Surface tension (mN/m) | | | Pigment | Mass ratio K | Yellow densi-ty | Jettabil-ity | Redness uneven-ness 1 | Redness uneven-ness 2 | Con-trast |
| | Type | Applica-tion amount (g/m$^2$) | | | | | Type | Con-tent (% by mass) | | | | | Type | | | | | | |
| Example 19 | Malonic acid/malic acid | 0.17 | 32 | 180 | Uncros-slinked poly-mer 1 | 0.34 | Glycerin | 23 | Acetylene compound 1 | 34 | 2 | PR254 | 0.41 | 3 | 2 | 3 | 3 | 4 |
| Example 20 | Malonic acid/malic acid | 0.17 | 32 | 119 | Uncros-slinked poly-mer 1 | 0.33 | Glycerin | 35 | Acetylene compound 1 | 34 | 2 | PR254 | 0.41 | 4 | 2 | 4 | 4 | 4 |
| Example 21 | Malonic acid/malic acid | 0.17 | 32 | 125 | Uncros-slinked poly-mer 1 | 0.33 | Glycerin | 23 | Acetylene compound 1 | 34 | 2 | PR122 | 0.41 | 4 | 3 | 4 | 3 | 4 |
| Example 22 | Malonic acid/malic acid | 0.17 | 32 | 125 | Uncros-slinked poly-mer 1 | 0.33 | Glycerin | 23 | Acetylene compound 1 | 34 | 2 | PV19 | 0.41 | 4 | 3 | 4 | 3 | 4 |
| Example 23 | Malonic acid/malic acid | 0.17 | 32 | 125 | Uncros-slinked poly-mer 1 | 0.33 | Glycerin | 23 | Acetylene compound 1 | 34 | 2 | PR254 | 0.33 | 4 | 3 | 4 | 4 | 3 |
| Example 24 | Malonic acid/malic acid | 0.17 | 32 | 125 | Uncros-slinked poly-mer 1 | 0.33 | Glycerin | 23 | Acetylene compound 1 | 34 | 2 | PR254 | 0.21 | 4 | 3 | 4 | 4 | 2 |
| Compara-tive Exam-ple 1 | - | - | - | 125 | Uncros-slinked poly-mer 1 | 0.33 | Glycerin | 23 | Acetylene compound 1 | 34 | - | PR254 | 0.41 | 1 | 3 | 4 | 4 | 1 |
| Compara-tive Exam-ple 2 | Malonic acid/ma-lic acid | 0.17 | 32 | 125 | Uncros-slinked poly-mer 1 | 0.33 | Glycerin | 10 | Acetylene compound 1 | 34 | 2 | PR254 | 0.41 | 4 | 1 | 4 | 4 | 4 |

EP 4 620 692 A1

As shown in Table 5, in Examples 1 to 24, it was found that, since the pretreatment liquid applying step and the yellow ink applying step were provided, and the content of the organic solvent having a boiling point of 250°C or higher was 15% by mass to 40% by mass with respect to the total amount of the yellow ink, the yellow density of the image was high and the j ettability was excellent.

On the other hand, in Comparative Example 1, the pretreatment liquid applying step was not performed, and thus the yellow density of the image was extremely low.

In Comparative Example 2, it was found that the content of the organic solvent having a boiling point of 250°C or higher was less than 15% by mass, and thus the jettability was deteriorated.

In Example 1, it was found that the application amount of the coagulating agent applied onto the permeable substrate was 0.08 g/m$^2$ or more, and thus the yellow density was high as compared with Example 3.

In Example 1, it was found that the application amount of the coagulating agent applied onto the permeable substrate was 0.35 g/m$^2$ or less, and thus the redness unevenness was suppressed as compared with Example 6.

In Example 1, it was found that the mass ratio Y of the content of the carboxy group-containing resin D$^Y$ to the content of PY110 was 0.25 or more, and thus the yellow density was higher and the jettability was excellent as compared with Example 10.

In Example 1, it was found that the mass ratio Y of the content of the carboxy group-containing resin D$^Y$ to the content of PY110 was 0.80 or less, and thus the redness unevenness was suppressed as compared with Example 12.

In Example 1, Example 13, and Example 14, it was found that the ink contained at least one surfactant selected from an acetylene compound or a polyoxyalkylene alkyl ether, and thus the redness unevenness was suppressed as compared with Example 15.

In Example 1, it was found that the average particle diameter of PY110 was 160 nm or less, and thus the yellow density was high, the jettability was excellent, and the redness unevenness was suppressed as compared with Example 19.

In Example 1, it was found that the absolute value of the difference between the surface tension of the yellow ink and the surface tension of the pretreatment liquid was 10 mN/m or less, and thus the redness unevenness was suppressed as compared with Example 18.

In Example 1, it was found that a step of applying the magenta ink containing water, PR254, and the carboxy group-containing resin D$^M$ was further provided, and thus the redness unevenness was suppressed as compared with Example 21 and Example 22.

In Example 1, it was found that the mass ratio Y of the content of the carboxy group-containing resin D$^Y$ to the content of PY110 was smaller than the mass ratio K of the content of the carboxy group-containing resin D$^K$ to the content of the black pigment, and thus the contrast was excellent as compared with Example 24.

In Example 1, it was found that the carboxy group-containing resin D$^Y$ was a polymer having no crosslinking structure, and thus the redness unevenness was suppressed as compared with Example 9.

A decorative plate was manufactured using the pretreatment liquid, the yellow ink, the magenta ink, and the black ink described in Example 1, and the cyan ink C1. Specifically, a wood-grain tone pattern image was recorded on the decorative paper by the same method as the pretreatment liquid applying step and the ink applying step described above. The decorative paper on which the image was recorded was infused with methylol melamine, and dried. The decorative paper into which the melamine resin was infused and a phenol resin-infused core paper were laminated and then heated and compressed under the conditions of 150°C, 100 kg/cm$^2$, and 10 minutes to obtain a decorative plate.

Explanation of References

A1: permeable substrate

W1: unwinding device
P1: pretreatment liquid applying device
IJ1: ink applying device
D1: drying zone
W2: winding device

**Claims**

**1.** An ink jet recording method, comprising:

a step of applying, onto a permeable substrate having an air permeability resistance of from 5 seconds to 50 seconds according to a Gurley test method, a pretreatment liquid which comprises water and at least one coagulating agent selected from the group consisting of an organic acid having a molecular weight of less than 1000 and a polyvalent metal salt; and

a step of applying a yellow ink onto a region of the permeable substrate onto which the pretreatment liquid has been applied, by an ink jet recording system,

wherein the yellow ink comprises water, an organic solvent having a boiling point of 250°C or higher, C. I. Pigment Yellow 110, and a carboxy group-containing resin $D^Y$, and

a content of the organic solvent having a boiling point of 250°C or higher is 15% by mass to 40% by mass with respect to a total amount of the yellow ink.

2. The ink jet recording method according to claim 1, wherein an application amount of the at least one coagulating agent applied onto the permeable substrate is from 0.08 g/m$^2$ to 0.35 g/m$^2$.

3. The ink jet recording method according to claim 1 or 2, wherein a mass ratio Y of a content of the carboxy group-containing resin $D^Y$ to a content of the C. I. Pigment Yellow 110 in the yellow ink is from 0.25 to 0.80.

4. The ink jet recording method according to claim 1 or 2, wherein the yellow ink comprises at least one surfactant selected from an acetylene compound or a polyoxyalkylene alkyl ether.

5. The ink jet recording method according to claim 1 or 2, wherein an average particle diameter of the C. I. Pigment Yellow 110 in the yellow ink is from 100 nm to 160 nm.

6. The ink jet recording method according to claim 1 or 2, wherein an absolute value of a difference between a surface tension of the yellow ink and a surface tension of the pretreatment liquid is 10 mN/m or less.

7. The ink jet recording method according to claim 1 or 2, further comprising a step of applying a magenta ink containing water, C. I. Pigment Red 254, and a carboxy group-containing resin $D^M$ onto the region of the permeable substrate onto which the pretreatment liquid has been applied, by an ink jet recording system.

8. The ink jet recording method according to claim 1 or 2, further comprising a step of applying a black ink containing water, a black pigment, and a carboxy group-containing resin $D^K$ onto the region of the permeable substrate onto which the pretreatment liquid has been applied, by an ink jet recording system,

wherein a mass ratio Y of a content of the carboxy group-containing resin $D^Y$ to a content of the C. I. Pigment Yellow 110 in the yellow ink is smaller than a mass ratio K of a content of the carboxy group-containing resin $D^K$ to a content of the black pigment in the black ink.

9. The ink jet recording method according to claim 1 or 2, wherein the carboxy group-containing resin $D^Y$ is a polymer having no crosslinking structure.

10. The ink jet recording method according to claim 7, wherein the carboxy group-containing resin $D^M$ is a polymer having a crosslinking structure.

11. The ink jet recording method according to claim 8, wherein the carboxy group-containing resin $D^K$ is a polymer having a crosslinking structure.

12. The ink jet recording method according to claim 1 or 2, wherein the permeable substrate is decorative paper for a decorative plate.

13. A method of manufacturing a melamine decorative plate, comprising:

a step of preparing decorative paper on which an image is recorded, using the ink jet recording method according to claim 12; and

a step of infusing the decorative paper on which the image is recorded with a melamine resin.

14. A melamine decorative plate, manufactured by the method of manufacturing a melamine decorative plate according to claim 13.

# FIG. 1

IJ1

D1

A1

P1

W1

W2

Europäisches
Patentamt

European
Patent Office

Office européen
des brevets

## EUROPEAN SEARCH REPORT

**Application Number**

EP 25 16 4537

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/347675 A1 (YAMADA AKIKO [JP] ET AL) 2 November 2023 (2023-11-02) | 1-11 | INV.<br>B41M5/00 |
| Y | * paragraph [0006] - paragraph [0250]; figure 1 *<br>* paragraphs [0018], [0024], [0027], [0032], [0038], [0053] - [0055], [0065], [0068] * | 5,12-14 | ADD.<br>C09D11/54 |
| Y | JP 2002 079739 A (RICOH KK) 19 March 2002 (2002-03-19)<br>* paragraphs [0022], [0062], [0080], [0098] - [0100], [0117], [0136] - [0139]; figures 1,2 *<br>* paragraph [0165] * | 1-14 | |
| Y | US 2019/375223 A1 (RAHIMI ALIREZA [US] ET AL) 12 December 2019 (2019-12-12)<br>* paragraphs [0021] - [0078] *<br>* paragraphs [0088] - [0106] * | 1-14 | |
| Y | US 2024/059924 A1 (SAKUMA DAISUKE [JP]) 22 February 2024 (2024-02-22)<br>* paragraphs [0005], [0016], [0026], [0125], [0129], [0130], [0136], [0143], [0154] * | 1-14 | TECHNICAL FIELDS SEARCHED (IPC)<br><br>B41M<br>C09D<br>D06P |
| Y,D | US 2016/214395 A1 (TORFS RITA [BE] ET AL) 28 July 2016 (2016-07-28) | 12-14 | |
| A | * paragraphs [0119], [0120] *<br>* paragraph [0130] - paragraph [0141] * | 1-11 | |
| A | US 2005/007431 A1 (KOYANO MASAYUKI [JP] ET AL) 13 January 2005 (2005-01-13)<br>* paragraphs [0016] - [0117] * | 1-14 | |

The present search report has been drawn up for all claims

| Place of search | Date of completion of the search | Examiner |
|---|---|---|
| Munich | 14 August 2025 | Patosuo, Susanna |

EPO FORM 1503 03.82 (P04C01)

## ANNEX TO THE EUROPEAN SEARCH REPORT
## ON EUROPEAN PATENT APPLICATION NO.

EP 25 16 4537

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2025

| Patent document cited in search report | Publication date | Patent family member(s) | | Publication date |
|---|---|---|---|---|
| US 2023347675 A1 | 02-11-2023 | CN | 116892127 A | 17-10-2023 |
| | | EP | 4253648 A1 | 04-10-2023 |
| | | JP | 2023149829 A | 16-10-2023 |
| | | US | 2023347675 A1 | 02-11-2023 |
| JP 2002079739 A | 19-03-2002 | JP | 4570118 B2 | 27-10-2010 |
| | | JP | 2002079739 A | 19-03-2002 |
| US 2019375223 A1 | 12-12-2019 | CN | 109312185 A | 05-02-2019 |
| | | EP | 3433326 A1 | 30-01-2019 |
| | | US | 2019375223 A1 | 12-12-2019 |
| | | WO | 2018017307 A1 | 25-01-2018 |
| US 2024059924 A1 | 22-02-2024 | CN | 117587645 A | 23-02-2024 |
| | | JP | 2024027639 A | 01-03-2024 |
| | | US | 2024059924 A1 | 22-02-2024 |
| US 2016214395 A1 | 28-07-2016 | AU | 2014339178 A1 | 25-02-2016 |
| | | AU | 2018211283 A1 | 23-08-2018 |
| | | AU | 2018211284 A1 | 23-08-2018 |
| | | BR | 112016008924 A2 | 01-08-2017 |
| | | CA | 2920794 A1 | 30-04-2015 |
| | | CN | 105658436 A | 08-06-2016 |
| | | CN | 108725009 A | 02-11-2018 |
| | | CN | 109572260 A | 05-04-2019 |
| | | EP | 2865528 A1 | 29-04-2015 |
| | | EP | 2979887 A1 | 03-02-2016 |
| | | EP | 3293013 A1 | 14-03-2018 |
| | | EP | 4098453 A1 | 07-12-2022 |
| | | ES | 2762626 T3 | 25-05-2020 |
| | | ES | 2987892 T3 | 18-11-2024 |
| | | PL | 2979887 T3 | 29-06-2020 |
| | | US | 2016214395 A1 | 28-07-2016 |
| | | WO | 2015059002 A1 | 30-04-2015 |
| US 2005007431 A1 | 13-01-2005 | DE | 60200595 T2 | 16-06-2005 |
| | | EP | 1243435 A1 | 25-09-2002 |
| | | ES | 2220848 T3 | 16-12-2004 |
| | | US | 2003064206 A1 | 03-04-2003 |
| | | US | 2005007431 A1 | 13-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022001621 A
- US 20160214395 A
- JP 2013001854 A

**Non-patent literature cited in the description**

- **TAKEHIKO FUJIMOTO**. Introduction of New Surfactants. Sanyo Chemical Industries, Ltd., 1992, 94-107